# EUROPÄISCHE PATENTANMELDUNG

(11) **EP 4 141 368 A1**
(43) Veröffentlichungstag der Anmeldung: **01.03.2023**
(21) Anmeldenummer: 22190694.4
(22) Anmeldetag: 29.07.2016
(51) Int. Cl.: F26B 25/00, F26B 3/04, F26B 15/12

(54) **BEHANDLUNGSANLAGE UND VERFAHREN ZUM BEHANDELN VON WERKSTÜCKEN**

(30) Priorität: 31.07.2015 DE 102015214706
(62) Teilanmeldung aus: 16745461.0
(71) Anmelder: Dürr Systems AG, 74321 Bietigheim-Bissingen (DE)
(72) Erfinder: Iglauer, Oliver, 70469 Stuttgart (DE); Woll, Kevin, 74080 Heilbronn (DE); Wieland, Dietmar, 71336 Waiblingen (DE); Wickenhäuser, Joachim, 71088 Holzgerlingen (DE)
(74) Vertreter: DTS Patent- und Rechtsanwälte Schnekenbühl und Partner mbB

(57) **Zusammenfassung**

Um eine Behandlungsanlage zum Behandeln von Werkstücken zu schaffen, welche einfach aufgebaut ist und eine optimierte Werkstückbehandlung ermöglicht, wird vorgeschlagen, dass die Behandlungsanlage einen Behandlungsraum und eine Fördervorrichtung umfasst, mittels welcher die Werkstücke dem Behandlungsraum zuführbar, von dem Behandlungsraum abführbar und/oder in einer Förderrichtung durch den Behandlungsraum hindurchförderbar sind.

## Beschreibung

Die vorliegende Erfindung betrifft eine Behandlungsanlage und ein Verfahren zum Behandeln von Werkstücken. Insbesondere dient eine Behandlungsanlage dem Trocknen von beschichteten Fahrzeugkarosserien. Das Verfahren zum Behandeln von Werkstücken ist somit insbesondere ein Verfahren zum Trocknen von beschichteten Fahrzeugkarosserien.

Behandlungsanlagen und Behandlungsverfahren sind insbesondere aus der EP 1 998 129 B1, der US 2006/0068094 A1, der EP 1 302 737 A2 und der WO 02/073109 A1 bekannt.

Der vorliegenden Erfindung liegt die Aufgabe zugrunde, eine Behandlungsanlage bereitzustellen, welche einfach aufgebaut ist und eine optimierte Werkstückbehandlung ermöglicht.

Diese Aufgabe wird erfindungsgemäß durch eine Behandlungsanlage zum Behandeln von Werkstücken, beispielsweise zum Trocknen von beschichteten Fahrzeugkarosserien, gelöst, wobei die Behandlungsanlage einen Behandlungsraum und eine Fördervorrichtung umfasst, mittels welcher die Werkstücke dem Behandlungsraum zuführbar, von dem Behandlungsraum abführbar und/oder in einer Förderrichtung durch den Behandlungsraum hindurchförderbar sind.

Bei einer Ausgestaltung der Erfindung kann vorgesehen sein, dass die Werkstücke mittels der Fördervorrichtung derart aufnehmbar und zumindest abschnittsweise derart durch den Behandlungsraum förderbar sind, dass eine Längsrichtung der Werkstücke zumindest näherungsweise horizontal und/oder quer, insbesondere im Wesentlichen senkrecht, zur Förderrichtung ausgerichtet ist. Eine Hochachse des Werkstücks, welche im fertiggestellten Zustand des Werkstücks zumindest näherungsweise vertikal ausgerichtet ist, ist während der Förderung des Werkstücks durch den Behandlungsraum vorzugsweise zumindest näherungsweise vertikal oder zumindest näherungsweise horizontal ausgerichtet.

Insbesondere kann vorgesehen sein, dass die Werkstücke mittels der Fördervorrichtung derart aufnehmbar und zumindest abschnittsweise derart durch den Behandlungsraum förderbar sind, dass eine Längsrichtung der Werkstücke zumindest näherungsweise horizontal ausgerichtet ist und/oder mit der Förderrichtung einen Winkel von zumindest näherungsweise 90° einschließt.

Beispielsweise sind die Werkstücke zur Förderung derselben in einer zumindest näherungsweise horizontalen Ebene um eine zumindest näherungsweise vertikale Achse um zumindest näherungsweise 90° gedreht zur Förderrichtung angeordnet.

Unter den Formulierungen "zumindest näherungsweise" und "ungefähr" ist in dieser Beschreibung und den beigefügten Ansprüchen vorzugsweise eine Abweichung von höchstens +/- 20 %, beispielsweise höchstens +/- 10 %, insbesondere höchstens +/- 5 %, von dem angegebenen Wert zu verstehen.

Vorteilhaft kann es sein, wenn die Behandlungsanlage mindestens eine Einlassöffnung zum Zuführen von Gas zu dem Behandlungsraum und mindestens eine Auslassöffnung zum Abführen von Gas aus dem Behandlungsraum umfasst, welche vorzugsweise auf einander gegenüberliegenden Seiten des Werkstücks angeordnet sind.

Mindestens eine Einlassöffnung und/oder mindestens eine Auslassöffnung kann beispielsweise in einer Wand, welche den Behandlungsraum begrenzt, angeordnet und/oder ausgebildet sein.

Alternativ oder ergänzend hierzu kann vorgesehen sein, dass mindestens eine Einlassöffnung und/oder mindestens eine Auslassöffnung durch einen Endbereich einer in den Behandlungsraum mündenden Strömungsführung gebildet ist. Eine solche Strömungsführung kann beispielsweise ein oder mehrere Strömungsleitelemente oder Strömungsführungselemente und/oder einen Führungskanal umfassen. Entscheidend ist dabei vorzugsweise, dass ein die mindestens eine Einlassöffnung und/oder die mindestens eine Auslassöffnung bildender Bereich der Strömungsführung der Abgabe zumindest eines Großteils des zugeführten Gasstroms in den Behandlungsraum und/oder der Herausführung zumindest eines Großteils des aus dem Behandlungsraum herauszuführenden Gasstroms dient, insbesondere unabhängig davon, ob der Gasstrom vor dessen Zuführung zu dem Behandlungsraum und/oder nach dessen Abführung aus dem Behandlungsraum noch abschnittsweise innerhalb einer Innenkontur des den Behandlungsraum umgebenden Gehäuses und/oder innerhalb des Behandlungsraums geführt ist oder nicht.

Vorzugsweise sind die mindestens eine Einlassöffnung einerseits und die mindestens eine Auslassöffnung andererseits auf voneinander verschiedenen Seiten einer vertikalen Werkstückquermittelebene angeordnet.

Eine vertikale Werkstückquermittelebene ist insbesondere eine Ebene, welche senkrecht zu einer Werkstücklängsrichtung ausgerichtet ist und durch einen bezüglich einer Werkstücklängsrichtung mittigen Mittelpunkt und/oder Schwerpunkt des Werkstücks verläuft.

Günstig kann es sein, wenn sämtliche Einlassöffnungen einerseits und sämtliche Auslassöffnungen andererseits auf voneinander verschiedenen Seiten einer vertikalen Werkstückquermittelebene angeordnet sind. Bei einer Ausgestaltung der Erfindung kann vorgesehen sein, dass mindestens eine Einlassöffnung und mindestens eine Auslassöffnung in einem Abstand voneinander entfernt angeordnet sind, welcher mindestens ungefähr 60 %, insbesondere mindestens ungefähr 80 %, beispielsweise mindestens ungefähr 100 %, einer längs einer Werkstücklängsrichtung genommenen Gesamtlänge des Werkstücks beträgt.

Vorteilhaft kann es sein, wenn die mindestens eine Einlassöffnung und die mindestens eine Auslassöffnung bezüglich der Förderrichtung versetzt angeordnet sind.

Die mindestens eine Einlassöffnung und die mindestens eine Auslassöffnung sind vorzugsweise einer Halteposition eines Werkstücks zugeordnet, in welcher das Werkstück zumindest zeitweise verweilt. Durch den Versatz der mindestens einen Einlassöffnung und der mindestens einen Auslassöffnung bezüglich der Förderrichtung kann vorzugsweise eine Gasströmung mit einer vektoriellen Komponente längs der Förderrichtung erzielt werden. Insbesondere kann vorgesehen sein, dass ein Werkstück in der Halteposition längs der Förderrichtung mit einem Gasstrom durchströmt wird.

Es kann vorgesehen sein, dass die Behandlungsanlage mindestens eine Einlassöffnung zum Zuführen von Gas zu dem Behandlungsraum und mindestens eine Auslassöffnung zum Abführen von Gas aus dem Behandlungsraum umfasst, wobei die mindestens eine Einlassöffnung einerseits und die mindestens eine Auslassöffnung andererseits bezüglich einer vertikalen Längsmittelebene des Behandlungsraums auf unterschiedlichen Seiten des Behandlungsraums angeordnet sind.

Die vertikale Längsmittelebene ist vorzugsweise eine bezüglich einer maximalen oder durchschnittlichen horizontalen Quererstreckung des Behandlungsraums mittig angeordnete Ebene.

Die vertikale Längsmittelebene verläuft insbesondere parallel zur Förderrichtung.

Die Quererstreckung ist insbesondere eine Erstreckung in einer senkrecht zur Förderrichtung verlaufenden Richtung.

Günstig kann es sein, wenn die Behandlungsanlage ein oder mehrere Einlassöffnungen zum Zuführen von Gas zu dem Behandlungsraum und/oder ein oder mehrere Auslassöffnungen zum Abführen von Gas aus dem Behandlungsraum umfasst.

Vorzugsweise sind die eine oder die mehreren, insbesondere sämtliche, Einlassöffnungen in einem von zwei durch eine vertikale, horizontale oder schräg hierzu verlaufende Längsmittelebene geteilten Halbräumen des Behandlungsraums angeordnet.

Alternativ oder ergänzend hierzu kann vorgesehen sein, dass die eine oder die mehreren, insbesondere sämtliche, Auslassöffnungen in einem der zwei durch die vertikale, horizontale oder schräg hierzu verlaufende Längsmittelebene geteilten Halbräume des Behandlungsraums angeordnet sind.

Insbesondere kann vorgesehen sein, dass die eine oder die mehreren, insbesondere sämtliche, Einlassöffnungen in einem ersten Halbraum und die eine oder die mehreren, insbesondere sämtliche, Auslassöffnungen in einem weiteren, insbesondere zweiten, der zwei Halbräume angeordnet sind.

Durch die Anordnung der Einlassöffnungen und/oder Auslassöffnungen in vorzugsweise jeweils nur einem von zwei Halbräumen des Behandlungsraums kann insbesondere eine einseitige Gaszuführung und/oder eine einseitige Gasabführung realisiert werden.

Die Behandlungsanlage umfasst vorzugsweise mehrere Einlassöffnungen zum Zuführen von Gas zu dem Behandlungsraum und mehrere Auslassöffnungen zum Abführen von Gas aus dem Behandlungsraum, wobei die Einlassöffnungen einerseits und die Auslassöffnungen andererseits vorzugsweise bezüglich einer Diagonalebene zumindest näherungsweise einander gegenüberliegend angeordnet sind, wobei die Diagonalebene sich parallel zur Förderrichtung und im Wesentlichen diagonal durch den Behandlungsraum erstreckt.

Vorzugsweise schließt die Diagonalebene mit der Schwerkraftrichtung einen Winkel von mindestens ungefähr 40°, beispielsweise ungefähr 45°, und/oder höchstens ungefähr 50° ein.

Bei einer Ausgestaltung der Erfindung kann vorgesehen sein, dass die Behandlungsanlage mehrere Einlassöffnungen zum Zuführen von Gas zu dem Behandlungsraum und mehrere Auslassöffnungen zum Abführen von Gas aus dem Behandlungsraum umfasst, wobei die Einlassöffnungen und die Auslassöffnungen so angeordnet sind, dass der Behandlungsraum quer, insbesondere im Wesentlichen senkrecht, zur Förderrichtung und/oder zumindest näherungsweise diagonal mit Gas durchströmbar ist.

Die Behandlungsanlage umfasst vorzugsweise mindestens ein Umluftmodul.

Insbesondere können mehrere Umluftmodule der Behandlungsanlage vorgesehen sein.

Ein Umluftmodul, insbesondere jedes Umluftmodul, umfasst vorzugsweise Folgendes:
eine Gaszuführung zum Zuführen von Gas zu dem Behandlungsraum; und/oder
eine Gasabführung zum Abführen von Gas aus dem Behandlungsraum; und/oder
eine Gebläsevorrichtung zum Antreiben eines Umluftgasstroms; und/oder eine Abscheidevorrichtung zum Abscheiden von Verunreinigungen aus dem Umluftgasstrom; und/oder
eine Verteilervorrichtung zum Verteilen des dem Behandlungsraum zuzuführenden Umluftgasstroms auf mehrere Einlassöffnungen der Gaszuführung; und/oder
eine Sammelvorrichtung, mittels welcher der durch mehrere Auslassöffnungen der Gasabführung aus dem Behandlungsraum abgeführte Umluftgasstrom zusammenführbar ist.

Vorzugsweise umfasst die Behandlungsanlage mehrere längs der Förderrichtung aufeinanderfolgende Umluftmodule.

Jedes Umluftmodul bildet vorzugsweise einen, insbesondere vollständigen, Abschnitt der Behandlungsanlage.

Insbesondere umfasst ein Umluftmodul ein Umluftaggregat, welches an ein den Behandlungsraum umgebendes Gehäuse andockbar ist.

Ein Umluftmodul umfasst insbesondere einen Abschnitt des den Behandlungsraum umgebenden Gehäuses und ein Umluftaggregat.

In dieser Beschreibung und den beigefügten Ansprüchen wird der Begriff "Umluft" nicht zwingend auf das Gas "Luft" festgelegt. Vielmehr bezeichnet der Begriff "Umluft" vorzugsweise ein in einem Kreislauf geführtes Gas, welches insbesondere mehrfach aufbereitet und/oder wiederverwendet wird.

Vorzugsweise sind zwischen dem Umluftaggregat und dem den Behandlungsraum umgebenden Gehäuse keine Verbindungskanäle vorgesehen. Vielmehr weisen das Umluftaggregat und das Gehäuse, welches den Behandlungsraum umgibt, vorzugsweise eine gemeinsame Wandung auf.

Ein Gasstrom ist vorzugsweise durch eine Öffnung oder Ausnehmung in der gemeinsamen Wandung von dem Umluftaggregat in den Behandlungsraum führbar.

Die Gaszuführung oder Gasabführung kann Bestandteil des Umluftaggregats oder aber des Gehäuses, welches den Behandlungsraum umgibt, sein. Je nachdem ist die Öffnung in der gemeinsamen Wandung zur Zuführung von Gas zu der Gaszuführung oder aber zum Zuführen von Gas zu dem Behandlungsraum geeignet.

Die Behandlungsanlage umfasst vorzugsweise mindestens ein Spülmodul.

Insbesondere können mehrere Spülmodule der Behandlungsanlage vorgesehen sein.

Ein Spülmodul, insbesondere jedes Spülmodul, umfasst vorzugsweise Folgendes:
eine Gaszuführung zum Zuführen von Gas zu dem Behandlungsraum; und/oder
eine Gasabführung zum Abführen von Gas aus dem Behandlungsraum; und/oder
eine Gebläsevorrichtung zum Antreiben eines Spülgasstroms; und/oder eine Abscheidevorrichtung zum Abscheiden von Verunreinigungen aus dem Spülgasstrom; und/oder
eine Verteilervorrichtung zum Verteilen des dem Behandlungsraum zuzuführenden Spülgasstroms auf mehrere Einlassöffnungen der Gaszuführung; und/oder
eine Sammelvorrichtung, mittels welcher der durch mehrere Auslassöffnungen der Gasabführung aus dem Behandlungsraum abgeführte Spülgasstrom zusammenführbar ist.

Vorzugsweise umfasst die Behandlungsanlage mehrere längs der Förderrichtung aufeinanderfolgende Spülmodule.

Jedes Spülmodul bildet vorzugsweise einen, insbesondere vollständigen, Abschnitt der Behandlungsanlage.

Insbesondere umfasst ein Spülmodul ein Spülgasaggregat, welches an ein den Behandlungsraum umgebendes Gehäuse andockbar ist.

Ein Spülmodul umfasst insbesondere einen Abschnitt des den Behandlungsraum umgebenden Gehäuses und ein Spülgasaggregat.

Vorzugsweise sind zwischen dem Spülgasaggregat und dem den Behandlungsraum umgebenden Gehäuse keine Verbindungskanäle vorgesehen. Vielmehr weisen das Spülgasaggregat und das Gehäuse, welches den Behandlungsraum umgibt, vorzugsweise eine gemeinsame Wandung auf.

Ein Gasstrom ist vorzugsweise durch eine Öffnung oder Ausnehmung in der gemeinsamen Wandung von dem Spülgasaggregat in den Behandlungsraum führbar.

Die Gaszuführung oder Gasabführung kann Bestandteil des Spülgasaggregats oder aber des Gehäuses, welches den Behandlungsraum umgibt, sein. Je nachdem ist die Öffnung in der gemeinsamen Wandung zur Zuführung von Gas zu der Gaszuführung oder aber zum Zuführen von Gas zu dem Behandlungsraum geeignet.

Ein oder mehrere Umluftmodule oder sämtliche Umluftmodule der Behandlungsanlage und/oder ein oder mehrere Spülmodule oder sämtliche Spülmodule der Behandlungsanlage können einzelne oder mehrere oder sämtliche der allgemein im Zusammenhang mit einem Modul beschriebenen Merkmale und/oder Vorteile aufweisen.

Ein oder mehrere Module oder sämtliche Module der Behandlungsanlage umfassen vorzugsweise jeweils eine oder mehrere Transporteinheiten oder sind jeweils aus einer oder mehreren Transporteinheiten gebildet.

Eine Transporteinheit ist insbesondere eine transportable Einheit, welche als Ganzes und/oder ohne weitere Unterteilung oder ohne weiteres Zerlegen in Bestandteile der Transporteinheit von einem Ort zu einem anderen Ort transportiert werden kann. Beispielsweise ist eine Transporteinheit als Ganzes mit einem Lastkraftwagen zur Aufnahme von Standardcontainern, Iso-Containern oder Schiffsfracht-Containern transportierbar.

Beispielsweise kann vorgesehen sein, dass ein oder mehrere Module oder sämtliche Module jeweils mehrere Transporteinheiten, beispielsweise drei Transporteinheiten, umfassen, welche gemeinsam einen Behandlungsraumabschnitt des Moduls bilden oder umgeben. Zusätzlich ist vorzugsweise jedem Modul oder jeder dieser Transporteinheiten ein Aggregat, insbesondere ein Umluftaggregat und/oder ein Spülgasaggregat, zugeordnet.

Es kann vorgesehen sein, dass nur einer Transporteinheit eines Moduls ein Aggregat, insbesondere ein Umluftaggregat und/oder ein Spülgasaggregat, zugeordnet ist.

Insbesondere kann vorgehen sein, dass von drei Transporteinheiten eines Moduls, welche gemeinsam einen Behandlungsraumabschnitt des Moduls bilden oder umgeben, nur einer Transporteinheit, beispielsweise einer mittig angeordneten Transporteinheit, ein Aggregat, insbesondere ein Umluftaggregat und/oder ein Spülgasaggregat, zugeordnet ist. In diesem Fall sind dann beispielsweise nur in dieser Transporteinheit eine oder mehrere Ringgasströmungen erzeugbar.

Ein Aggregat, insbesondere ein Umluftaggregat und/oder ein Spülgasaggregat, bildet vorzugsweise eine weitere Transporteinheit des Moduls.

Vorteilhaft kann es sein, wenn eine Längserstreckung eines Aggregats, insbesondere eines Umluftaggregats und/oder eines Spülgasaggregats, längs der Förderrichtung zumindest näherungsweise einer Längserstreckung einer Transporteinheit längs der Förderrichtung entspricht.

Günstig kann es sein, wenn in einer oder mehreren Transporteinheiten oder sämtlichen Transporteinheiten, welche einen Behandlungsraumabschnitt des Moduls bilden oder umgeben, jeweils genau eine Ringgasströmung oder mehrere Ringgasströmungen erzeugbar sind oder erzeugt werden.

Vorteilhaft kann es sein, wenn einer oder mehreren, insbesondere sämtlichen, Transporteinheiten jeweils genau ein Bearbeitungstakt und/oder jeweils genau eine Bearbeitungsposition (Werkstückplatz) zur Bearbeitung eines Werkstücks zugeordnet ist. Innerhalb dieser einen oder dieser mehreren, insbesondere sämtlicher, Transporteinheiten existiert dann vorzugsweise jeweils nur eine einzige Halteposition, in welcher die Werkstücke nacheinander angehalten werden, um einen Behandlungsvorgang durchzuführen.

Es kann jedoch auch vorgesehen sein, dass einer oder mehreren, insbesondere sämtlichen, Transporteinheiten jeweils mehrere Bearbeitungstakte und/oder jeweils mehrere Bearbeitungspositionen (Werkstückplätze) zur Bearbeitung von Werkstücken zugeordnet sind. Innerhalb dieser einen oder dieser mehreren, insbesondere sämtlicher, Transporteinheiten existieren dann vorzugsweise jeweils mehrere Haltepositionen, in welchen die Werkstücke nacheinander angehalten werden, um einen oder mehrere Behandlungsvorgänge durchzuführen.

Die Verteilervorrichtung ist vorzugsweise mittels einer Trennwand von dem Behandlungsraum getrennt.

Vorzugsweise ist die Verteilervorrichtung vollständig auf einer Seite des Behandlungsraums angeordnet und/oder ausgebildet.

Die Trennwand bildet oder ist insbesondere eine Seitenwand des Behandlungsraums oder ein Abschnitt einer Seitenwand des Behandlungsraums.

Eine oder mehrere Einlassöffnungen, optional sämtliche Einlassöffnungen, sind vorzugsweise in der Trennwand ausgebildet.

Die Trennwand ist vorzugsweise innerhalb des Gehäuses, welches den Behandlungsraum umgibt, angeordnet. Die Verteilervorrichtung ist dann vorzugsweise Bestandteil des Gehäuses, welches den Behandlungsraum umgibt.

Es kann jedoch auch vorgesehen sein, dass die Trennwand insbesondere eine gemeinsame Wand zwischen dem Umluftaggregat oder Spülgasaggregat einerseits und dem Gehäuse, welches den Behandlungsraum umgibt, andererseits ist.

Alternativ oder ergänzend zu mindestens einer in einer Trennwand angeordneten Einlassöffnung kann vorgesehen sein, dass mindestens eine Einlassöffnung in einer Bodenwand des den Behandlungsraum umgebenden Gehäuses und/oder in einer Deckenwand des den Behandlungsraum umgebenden Gehäuses angeordnet ist.

Insbesondere können mehrere der vorstehend beschriebenen Einlassöffnungen vorgesehen sein.

Günstig kann es sein, wenn die Trennwand zumindest abschnittsweise einer Werkstückkontur folgend, beispielsweise einer Werkstücklängskontur folgend, ausgebildet ist.

Vorteilhaft kann es sein, wenn die Behandlungsanlage eine Behandlungsanlage zur Behandlung von Fahrzeugkarosserien ist und wenn die Trennwand eine zumindest näherungsweise parallel zu einer Fahrzeugfront oder einem Fahrzeugheck einer Fahrzeugkarosserie verlaufenden im Wesentlichen vertikalen Abschnitt, einen zumindest näherungsweise parallel zu einer Fronthaube oder Heckhaube der Fahrzeugkarosserie verlaufenden im Wesentlichen horizontalen Abschnitt und/oder eine zumindest näherungsweise parallel zu A-Säulen oder C-Säulen der Fahrzeugkarosserie verlaufenden schrägen Abschnitt umfasst.

Günstig kann es sein, wenn die Trennwand mehrere Einlassöffnungen in dem zumindest näherungsweise parallel zu einer Fahrzeugfront oder einem Fahrzeugheck einer Fahrzeugkarosserie verlaufenden im Wesentlichen vertikalen Abschnitt und/oder mehrere Einlassöffnungen in dem zumindest näherungsweise parallel zu A-Säulen oder C-Säulen der Fahrzeugkarosserie verlaufenden schrägen Abschnitt umfasst.

Die Behandlungsanlage, insbesondere der Behandlungsraum, ist vorzugsweise an eine Außenform eines vertikalen Längsschnitts der Werkstücke angepasst, insbesondere zumindest näherungsweise komplementär zu einer Außenform eines vertikalen Längsschnitts der Werkstücke ausgebildet.

Beispielsweise sind eine oder beide Seitenwände des Behandlungsraums, beispielsweise eine Trennwand und/oder eine der Trennwand gegenüberliegende Seitenwand, und/oder eine Deckenwand und/oder eine Bodenwand des Behandlungsraums an eine Außenform eines vertikalen Längsschnitts der Werkstücke angepasst, insbesondere zumindest näherungsweise komplementär zu einer Außenform eines vertikalen Längsschnitts der Werkstücke ausgebildet.

Eine Außenform eines vertikalen Längsschnitts ist insbesondere eine maximale Außenkontur der Werkstücke, wenn die Werkstücke längs einer vertikalen Längsmittelebene geschnitten werden.

Günstig kann es sein, wenn die Behandlungsanlage mehrere Spülmodule und/oder mehrere Umluftmodule umfasst, wobei jedes Umluftmodul vorzugsweise eine Aufheizzone und/oder Haltezone und/oder Kühlzone des Behandlungsraums bildet.

Vorzugsweise weist die Behandlungsanlage mehrere in der Förderrichtung aufeinanderfolgende Module, insbesondere Umluftmodule und/oder Spülmodule, auf.

Vorteilhaft kann es sein, wenn die Sammelvorrichtung einen vorzugsweise außerhalb des Behandlungsraums angeordneten Sammelkanal umfasst, in welchen mehrere Auslassöffnungen münden.

Alternativ oder ergänzend hierzu kann vorgesehen sein, dass die Sammelvorrichtung einen Rückführkanal umfasst, mittels welchem der durch mehrere Auslassöffnungen aus dem Behandlungsraum abgeführte Umluftgasstrom oder Spülgasstrom zur Gebläsevorrichtung, zur Abscheidevorrichtung und/oder zur Verteilervorrichtung führbar ist.

Vorzugsweise umfasst die Behandlungsanlage, insbesondere ein oder mehrere Umluftmodule oder jedes Umluftmodul der Behandlungsanlage, einen oder mehrere Rückführkanäle, welche jeweils eine oder mehrere Auslassöffnungen, durch welche ein Gasstrom, insbesondere ein Umluftgasstrom und/oder ein Spülgasstrom, aus dem Behandlungsraum abführbar ist, mit jeweils einer oder mehreren Einlassöffnungen zur Zuführung des Umluftgasstroms und/oder eines Spülgasstroms zu dem Behandlungsraum verbinden.

Die Rückführkanäle sind vorzugsweise voneinander unabhängige Rückführkanäle. Beispielsweise umfassen ein oder mehrere Umluftmodule oder sämtliche Umluftmodule jeweils mehrere voneinander unabhängige Rückführkanäle.

Die Rückführkanäle verlaufen oder erstrecken sich vorzugsweise zumindest näherungsweise längs senkrecht zur Förderrichtung ausgerichteter Ebenen.

Mittels eines jeden Rückführkanals und der durch den jeweiligen Rückführkanal miteinander verbundenen mindestens einen Auslassöffnung und mindestens einen Einlassöffnung wird vorzugsweise innerhalb eines Umluftmoduls eine Ringgasströmung erzeugt, welche sich vorzugsweise zumindest näherungsweise in einer senkrecht zur Förderrichtung ausgerichteten Ebene erstreckt.

Vorzugsweise sind in einem oder mehreren Umluftmodulen oder in sämtlichen Umluftmodulen jeweils mehrere im Wesentlichen voneinander unabhängige und/oder parallel zueinander verlaufende Ringgasströmungen gebildet.

Eine effektive Hauptströmungsrichtung des durch den Behandlungsraum geführten Gasstroms schließt mit der Förderrichtung vorzugsweise einen Winkel von mindestens ungefähr 70°, beispielsweise mindestens ungefähr 80°, insbesondere mindestens ungefähr 85°, ein. Eine unerwünschte Längsströmung des Gasstroms längs der Förderrichtung kann hierdurch vorzugsweise minimiert werden.

Günstig kann es sein, wenn eine Gebläsevorrichtung mehreren Rückführkanälen und/oder Ringgasströmungen zugeordnet ist.

Beispielsweise umfassen ein oder mehrere Umluftmodule oder jedes Umluftmodul der Behandlungsanlage jeweils eine Gebläsevorrichtung und mehrere dieser Gebläsevorrichtung zugeordnete Rückführkanäle und/oder Ringgasströmungen.

Ferner kann vorgesehen sein, dass ein oder mehrere Umluftmodule oder jedes Umluftmodul der Behandlungsanlage mehrere Gebläsevorrichtungen und mehrere Rückführkanäle und/oder Ringgasströmungen umfassen, wobei jedem Rückführkanal und/oder jeder Ringgasströmung eine separate Gebläsevorrichtung zugeordnet ist.

Eine oder mehrere Gebläsevorrichtungen umfassen vorzugsweise jeweils ein rotierendes Laufrad, welches insbesondere ein Ventilatorelement mit Luftschaufeln ist.

Eine Rotationsachse des Laufrads ist vorzugsweise zumindest näherungsweise parallel oder zumindest näherungsweise senkrecht zur Förderrichtung ausgerichtet.

Alternativ oder ergänzend hierzu kann vorgesehen sein, dass eine Rotationsachse des Laufrads zumindest näherungsweise horizontal oder zumindest näherungsweise vertikal ausgerichtet ist.

Eine oder mehrere Gebläsevorrichtungen sind insbesondere als Radialventilator oder Axialventilator ausgebildet.

Eine Hauptströmungsrichtung eines Gasstroms, insbesondere Ringgasstroms, in einem oder mehreren Rückführkanälen ist vorzugsweise zumindest näherungsweise senkrecht zur Förderrichtung und/oder zumindest näherungsweise horizontal ausgerichtet.

Bei einer Ausgestaltung der Erfindung kann vorgesehen sein, dass ein oder mehrere Umluftmodule oder jedes Umluftmodul der Behandlungsanlage jeweils eine oder mehrere Einlassöffnungen, eine oder mehrere Auslassöffnungen und/oder einen oder mehrere Rückführkanäle umfasst, wobei die eine oder die mehreren Einlassöffnungen, die eine oder die mehreren Auslassöffnungen und/oder der eine oder die mehreren Rückführkanäle gemeinsam auf einer Seite einer den Behandlungsraum und/oder die Behandlungsanlage diagonal teilenden Diagonalebene angeordnet sind.

Insbesondere kann vorgesehen sein, dass die eine oder die mehreren Einlassöffnungen, die eine oder die mehreren Auslassöffnungen und/oder der eine oder die mehreren Rückführkanäle gemeinsam unterhalb oder oberhalb einer den Behandlungsraum und/oder die Behandlungsanlage diagonal teilenden Diagonalebene angeordnet sind.

Die Diagonalebene erstreckt sich insbesondere längs der Förderrichtung und/oder längs einer Schnittlinie oder Grenzlinie zwischen einer ersten Seitenwand des Behandlungsraums und einer Deckenwand des Behandlungsraums und/oder längs einer Schnittlinie oder Grenzlinie zwischen einer zweiten Seitenwand des Behandlungsraums und einer Bodenwand des Behandlungsraums, wobei die Seitenwände vorzugsweise bezüglich einer vertikalen Längsmittelebene des Behandlungsraums einander gegenüberliegend angeordnet sind.

Eine der beiden Seitenwände des Behandlungsraums ist vorzugsweise durch eine Trennwand gebildet, welche eine Verteilervorrichtung von dem Behandlungsraum trennt.

Die Schnittlinie oder Grenzlinie zwischen der ersten Seitenwand des Behandlungsraums und der Deckenwand des Behandlungsraums einerseits und die Schnittlinie oder Grenzlinie zwischen der zweiten Seitenwand des Behandlungsraums und der Bodenwand des Behandlungsraums andererseits weisen in horizontaler Richtung einen Abstand voneinander auf, welcher zumindest näherungsweise 40 %, insbesondere zumindest näherungsweise 60 %, beispielsweise zumindest näherungsweise 80 %, einer Gesamtbreite des Behandlungsraums in einer horizontal und senkrecht zur Förderrichtung genommenen Querrichtung beträgt.

Vorteilhaft kann es sein, wenn ein oder mehrere Umluftmodule oder jedes Umluftmodul der Behandlungsanlage variabel dimensionierbare und/oder unterschiedlich dimensionierte und/oder einstellbare und/oder regelbare Auslassöffnungen, Einlassöffnungen und/oder Rückführkanäle umfasst.

Die Auslassöffnungen, die Einlassöffnungen und/oder die Rückführkanäle sind vorzugsweise hinsichtlich eines Strömungsquerschnitts variabel dimensionierbar und/oder unterschiedlich dimensioniert und/oder einstellbar und/oder regelbar.

Günstig kann es sein, wenn mittels der Auslassöffnungen, der Einlassöffnungen und/oder der Rückführkanäle eine Strömungsrichtung, eine Strömungsgeschwindigkeit und/oder ein Volumenstrom des durch den Behandlungsraum geführten Gasstroms lokal beeinflussbar ist oder beeinflusst wird, beispielsweise für eine punktuelle Gasabsaugung und/oder Gaszuführung.

Insbesondere kann vorgesehen sein, dass eine unter dem Werkstück angeordnete Auslassöffnung einen im Vergleich zu einer zugeordneten Einlassöffnung reduzierten Strömungsquerschnitt aufweist, so dass sich eine Strömungsgeschwindigkeit unter dem Werkstück erhöht.

Bei einer Ausgestaltung der Erfindung kann vorgesehen sein, dass eine oder mehrere unter dem Werkstück angeordnete Auslassöffnungen ausgehend von einer Bodenwand oder Seitenwand des Behandlungsraums in Richtung des Werkstücks versetzt angeordnet sind. Beispielsweise können ein oder mehrere Führungskanäle vorgesehen sein, welche von der Bodenwand oder Seitenwand in den Behandlungsraum ragen und insbesondere eine werkstücknahe Gasabführung ermöglichen.

Bei einer bevorzugten Ausgestaltung der Erfindung kann vorgesehen sein, dass eine oder mehrere unter dem Werkstück angeordnete Auslassöffnungen ausgehend von einer Bodenwand des Behandlungsraums zumindest näherungsweise in vertikaler Richtung nach oben in Richtung des Werkstücks versetzt angeordnet sind. Beispielsweise können ein oder mehrere Führungskanäle vorgesehen sein, welche von der Bodenwand nach oben in den Behandlungsraum ragen und insbesondere eine werkstücknahe Gasabführung ermöglichen.

Eine oder mehrere von der Bodenwand oder Seitenwand abgewandt angeordnete Öffnungen des einen oder der mehreren Führungskanäle bilden vorzugsweise die eine oder die mehreren Auslassöffnungen.

Die Behandlungsanlage umfasst vorzugsweise eine Gaszuführung, mittels welcher ein Gasstrom in einen Innenraum eines Werkstücks richtbar ist.

Ein allgemein als "Gasstrom" bezeichneter Strom kann insbesondere ein Umluftgasstrom, ein Spülgasstrom, ein Inertgasstrom, etc. sein.

Bei einer Ausgestaltung der Erfindung kann vorgesehen sein, dass die Behandlungsanlage mindestens eine Gaszuführung umfasst, welche mindestens eine Einlassöffnung umfasst, mittels derer ein Gasstrom zumindest näherungsweise senkrecht zu einer Eintrittsebene einer Eintrittsöffnung eines Werkstücks in einen Innenraum des Werkstücks richtbar ist.

Die Eintrittsöffnung ist insbesondere eine Öffnung, in welcher im montierten Zustand eines als Kraftfahrzeug ausgebildeten Werkstücks eine Frontscheibe (Windschutzscheibe) oder Heckscheibe angeordnet ist.

Die Eintrittsebene ist insbesondere eine Ebene, in welcher sich eine Umrandung der Eintrittsöffnung erstreckt. Im Falle einer dreidimensional gekrümmten Umrandung ist die Eintrittsebene eine Ebene in welcher drei oder mehr am weitesten von der Einlassöffnung entfernte Punkte, insbesondere Eckpunkte, der Umrandung angeordnet sind. Im Falle einer spiegelsymmetrischen Umrandung weisen die Umrandung und die Eintrittsebene vorzugsweise eine gemeinsame Spiegelebene auf.

Günstig kann es sein, wenn ein Gasstrom, insbesondere ein Heißgasstrom, ein Spülgasstrom und/oder ein Kühlgasstrom, durch eine Eintrittsöffnung eines Werkstücks in einen Innenraum des Werkstücks gerichtet wird, wobei ein Anteil eines Volumenstroms des durch die Eintrittsöffnung in den Innenraum des Werkstücks gerichteten Gasstroms an einem Volumenstrom eines insgesamt auf und/oder in das Werkstück gerichteten Gasstroms mindestens ungefähr 50 %, vorzugsweise mindestens ungefähr 75 %, beträgt.

Es kann vorgesehen sein, dass die Behandlungsanlage eine Gasabführung umfasst, mittels welcher ein Gasstrom auf einer einer Gaszuführung abgewandten Seite des Werkstücks aus dem Behandlungsraum abführbar ist.

Insbesondere umfasst die Behandlungsanlage vorzugsweise mindestens eine Einlassöffnung und mindestens eine Auslassöffnung, welche auf einander gegenüberliegenden Seiten des Werkstücks angeordnet sind.

Es kann vorgesehen sein, dass die Behandlungsanlage mindestens eine Einlassöffnung zum Zuführen von Gas zu dem Behandlungsraum und mindestens eine Auslassöffnung zum Abführen von Gas aus dem Behandlungsraum umfasst, welche auf einander gegenüberliegenden Seiten des Werkstücks angeordnet sind, wobei vorzugsweise eine Durchströmung des Behandlungsraums derart vorgesehen ist, dass mindestens 70 %, vorzugsweise mindestens 90 %, des durch diese mindestens eine Einlassöffnung einströmenden Gases durch diese mindestens eine Auslassöffnung aus dem Behandlungsraum abführbar sind.

Die mindestens eine Einlassöffnung und die mindestens eine Auslassöffnung sind bezüglich einer Werkstücklängsrichtung vorzugsweise versetzt zueinander angeordnet.

Die Werkstücklängsrichtung und die Förderrichtung können beispielsweise parallel zueinander oder quer, insbesondere senkrecht, zueinander ausgerichtet sein.

Vorteilhaft kann es sein, wenn die mindestens eine Einlassöffnung in einem Frontbereich eines Werkstücks oder in einem Heckbereich eines Werkstücks angeordnet ist, während die mindestens eine Auslassöffnung vorzugsweise in einem Heckbereich bzw. in einem Frontbereich des Werkstücks angeordnet ist.

Günstig kann es sein, wenn die Behandlungsanlage mindestens eine Auslassöffnung zum Abführen von Gas aus dem Behandlungsraum umfasst, welche in einer den Behandlungsraum begrenzenden Bodenwand oder Seitenwand oder Deckenwand angeordnet ist.

Der Behandlungsraum ist vorzugsweise in einem Gehäuse (Einhausung) angeordnet. Vorzugsweise wird der Behandlungsraum begrenzt von einer Bodenwand, einer Seitenwand, einer weiteren Seitenwand oder Trennwand und/oder einer Deckenwand des Gehäuses.

Unter einem Trocknen des Werkstücks ist in dieser Beschreibung und den beigefügten Ansprüchen insbesondere ein Überführen einer auf das Werkstück aufgebrachten Schicht von einem Zustand unmittelbar nach der Applikation der Schicht in einen Zustand zu verstehen, in welchem die Schicht langzeitstabil ist.

Insbesondere ist ein Trocknen des Werkstücks ein Entfernen von Lösemittel, ein Vernetzen der aufgebrachten Schicht, ein Erstarren der aufgebrachten Schicht, etc.

Günstig kann es sein, wenn die Behandlungsanlage mehrere Module, insbesondere Umluftmodule und/oder Spülmodule, umfasst, welche mittels eines gemeinsamen Energiemoduls gekoppelt, insbesondere versorgt, sind.

Das Energiemodul ist insbesondere ein so genanntes Powermodul.

Es kann vorgesehen sein, dass die Fördervorrichtung eine Rotationsvorrichtung umfasst, mittels welcher eine Drehausrichtung der Werkstücke um eine vertikale Rotationsachse veränderbar ist.

Eine vertikale Rotationsachse ist insbesondere eine parallel zur Schwerkraftrichtung ausgerichtete Achse.

Mittels einer Rotationsvorrichtung der Fördervorrichtung kann vorzugsweise eine Drehausrichtung der Werkstücke derart verändert werden, dass die Werkstücke in einer sperrigeren ersten Drehausrichtung förderbar sind, dann in eine weniger sperrige zweite Drehausrichtung bringbar sind, um durch eine Engstelle hindurchgeführt zu werden. Eine solche Engstelle kann insbesondere eine Schleuse sein.

Nach Durchlaufen der Engstelle kann vorzugsweise mittels einer weiteren Rotationsvorrichtung das jeweilige Werkstück erneut in die sperrigere erste Drehausrichtung gebracht werden.

Eine sperrigere erste Drehausrichtung ist insbesondere eine Drehausrichtung eines als Fahrzeugkarosserie ausgebildeten Werkstücks derart, dass eine Werkstücklängsachse senkrecht zur Förderrichtung ausgerichtet ist. Eine weniger sperrige zweite Drehausrichtung ist insbesondere eine Drehausrichtung eines als Fahrzeugkarosserie ausgebildeten Werkstücks derart, dass die Werkstücklängsachse parallel zur Förderrichtung ausgerichtet ist.

Insbesondere zum Durchlaufen einer Engstelle, insbesondere Schleuse, kann beispielsweise eine Veränderung an der Drehausrichtung mittels einer oder mehrerer Rotationsvorrichtungen derart vorgesehen sein, dass einfach oder zweifach oder mehr als zweifach eine Drehung um 90° durchgeführt wird.

Günstig kann es sein, wenn die Fördervorrichtung eine Hebevorrichtung umfasst, mittels welcher die Werkstücke von einem ersten Niveau auf ein zweites Niveau anhebbar und/oder von dem zweiten Niveau auf das erste Niveau absenkbar sind.

Ferner kann vorgesehen sein, dass die Fördervorrichtung eine Umsetzvorrichtung umfasst, mittels welcher die Werkstücke von einer Teilförderstrecke an eine weitere Teilförderstrecke übergebbar sind, wobei die Förderrichtungen in den zwei Teilförderstrecken voneinander verschieden sind und wobei eine globale Drehausrichtung der Werkstücke relativ zu der Behandlungsanlage in beiden Teilförderstrecken identisch ist.

Mittels einer solchen Umsetzvorrichtung variiert vorzugsweise eine lokale Drehausrichtung relativ zur jeweiligen Förderrichtung in den Teilförderstrecken.

Beispielsweise kann eine um 90° gedrehte Förderrichtung unter Beibehaltung einer globalen Drehausrichtung relativ zu der Behandlungsanlage vorgesehen sein.

Beispielsweise kann vorgesehen sein, dass eine Schleuse in einer Werkstücklängsrichtung durchlaufen wird, um eine geringe Schleusenbreite zu ermöglichen. Eine eigentliche Förderung, insbesondere durch einen Behandlungsraum, erfolgt vorzugsweise quer, insbesondere senkrecht, zur Werkstücklängsrichtung.

Bei einer Ausgestaltung der Erfindung kann vorgesehen sein, dass die Fördervorrichtung eine Rotationsvorrichtung, mittels welcher eine Drehausrichtung der Werkstücke um eine vertikale Rotationsachse veränderbar ist, und eine Hebevorrichtung umfasst, mittels welcher die Werkstücke von einem ersten Niveau auf ein zweites Niveau anhebbar und/oder von dem zweiten Niveau auf das erste Niveau absenkbar sind, wobei die Rotationsvorrichtung und die Hebevorrichtung als eine integrierte Handhabungsvorrichtung zur Handhabung der Werkstücke zwischen zwei Teilförderstrecken ausgebildet sind.

Mittels der Handhabungsvorrichtung kann somit gleichzeitig oder auch nacheinander eine Rotation und/oder ein Heben oder Senken einzelner oder mehrerer Werkstücke durchgeführt werden.

Die Werkstücke sind vorzugsweise mittels der Fördervorrichtung längs mehrerer Teilförderstrecken förderbar, wobei die Teilförderstrecken sich vorzugsweise zu einer Gesamtförderstrecke ergänzen.

Mindestens zwei Teilförderstrecken sind vorzugsweise mittels einer Hebevorrichtung und/oder einer Rotationsvorrichtung und/oder einer Umsetzvorrichtung miteinander verbunden.

Die vorliegende Erfindung betrifft ferner ein Verfahren zum Behandeln von Werkstücken, beispielsweise zum Trocknen von beschichteten Fahrzeugkarosserien .

Der Erfindung liegt diesbezüglich die Aufgabe zugrunde, ein Verfahren bereitzustellen, mittels welchem eine optimierte Werkstückbehandlung durchführbar ist.

Diese Aufgabe wird erfindungsgemäß durch ein Verfahren zum Behandeln von Werkstücken, beispielsweise zum Trocknen von beschichteten Fahrzeugkarosserien, gelöst, wobei das Verfahren Folgendes umfasst:
Zuführen von Werkstücken zu einem Behandlungsraum einer Behandlungsanlage; und/oder
Hindurchführen von Werkstücken durch den Behandlungsraum; und/oder Abführen von Werkstücken aus dem Behandlungsraum.

Das Verfahren weist vorzugsweise einzelne oder mehrere der im Zusammenhang mit der Behandlungsanlage beschriebenen Merkmale und/oder Vorteile auf.

Ferner weist vorzugsweise die Behandlungsanlage einzelne oder mehrere der im Zusammenhang mit dem Verfahren beschriebenen Merkmale und/oder Vorteile auf.

Günstig kann es sein, wenn die Werkstücke mittels einer Fördervorrichtung zumindest abschnittsweise derart durch den Behandlungsraum gefördert werden, dass eine Längsrichtung der Werkstücke quer, insbesondere im Wesentlichen senkrecht, zur Förderrichtung ausgerichtet ist.

Vorteilhaft kann es sein, wenn mittels mindestens einer Einlassöffnung Gas zu dem Behandlungsraum zugeführt und mittels mindestens einer Auslassöffnung Gas aus dem Behandlungsraum abgeführt wird, wobei die Zuführung einerseits und die Abführung andererseits vorzugsweise auf voneinander verschiedenen Seiten einer vertikalen Werkstückquermittelebene und/oder einer Diagonalebene erfolgt.

Die Werkstücke werden vorzugsweise diskontinuierlich und/oder getaktet durch den Behandlungsraum gefördert.

Günstig kann es sein, wenn die Werkstücke an einer oder mehreren Haltepositionen angehalten werden und dort mit einem Gasstrom durchströmt, insbesondere durchspült, werden.

Insbesondere kann vorgesehen sein, dass die Werkstücke an einer oder mehreren Haltepositionen in einer vorgegebenen Relativposition relativ zu einer oder mehreren Einlassöffnungen und/oder einer oder mehreren Auslassöffnungen positioniert werden, um insbesondere eine gezielte Durchströmung der Werkstücke mit einem Gasstrom zu ermöglichen.

Vorzugsweise erfolgt eine Gaszuführung zu dem Behandlungsraum und/oder eine Gasabführung aus dem Behandlungsraum kontinuierlich, insbesondere unabhängig von einer vorzugsweise diskontinuierlichen und/oder getakteten Förderung der Werkstücke. Durch die diskontinuierliche und/oder getaktete Förderung der Werkstücke, insbesondere das Anhalten der Werkstücke an einer oder mehreren Haltepositionen, kann vorzugsweise trotz kontinuierlichen Gasstroms eine gewünschte Durchströmung des einen oder der mehreren Werkstücke ermöglicht werden, insbesondere ohne ein lokales Überhitzen des jeweiligen Werkstücks zu riskieren.

Es kann jedoch auch vorgesehen sein, dass eine Gaszuführung zu dem Behandlungsraum und/oder eine Gasabführung aus dem Behandlungsraum diskontinuierlich und/oder getaktet erfolgt, wobei die Förderung der Werkstücke dann vorzugsweise kontinuierlich oder diskontinuierlich und/oder getaktet erfolgt.

Insbesondere kann vorgesehen sein, dass ein Volumenstrom des durch den Behandlungsraum geführten Gasstroms reduziert und/oder unterbrochen wird, wenn ein oder mehrere Werkstücke bewegt werden und/oder in Zwischenpositionen, insbesondere in unerwünschten Zwischenpositionen, angeordnet sind. Hierdurch kann vorzugsweise eine optimierte Werkstücktemperierung erzielt werden. Ferner können hierdurch vorzugsweise unerwünschte Verwirbelungen reduziert oder ganz vermieden werden, insbesondere um ein Aufwirbeln von Staub oder sonstigen Verunreinigungen zu minimieren oder vollständig zu verhindern.

Eine Zwischenposition ist beispielsweise eine Position des Werkstücks innerhalb des Behandlungsraums zwischen zwei aufeinanderfolgenden Behandlungspositionen des Werkstücks.

Eine Zwischenposition ist insbesondere eine Position des Werkstücks innerhalb des Behandlungsraums, in welcher eine reguläre und/oder nicht reduzierte Zuführung des Gasstroms zu einer unerwünschten lokalen Überhitzung oder Abkühlung des Werkstücks führen würde. Beispielsweise ist eine Zwischenposition eine Position der Werkstücke, in welcher ein in den Behandlungsraum gerichteter Gasstrom statt in einen Innenraum der Werkstücke auf A-Säulen oder C-Säulen der Werkstücke oder an den Werkstücken vorbei strömt.

Vorteilhaft kann es sein, wenn die Werkstücke zumindest abschnittsweise oder zumindest teilweise in einer Werkstücklängsrichtung mit einem Gasstrom durchströmt, insbesondere durchspült, werden.

Günstig kann es sein, wenn mindestens ungefähr 35 %, insbesondere mindestens ungefähr 50 %, und/oder höchstens ungefähr 90 %, insbesondere höchstens ungefähr 80 %, des durch den Behandlungsraum strömenden Gasstroms durch die Werkstücke hindurch strömt.

Der Gasstrom kann dabei insbesondere ein Heizgasstrom zum Erhitzen der Werkstücke und/oder ein Spülgasstrom zum Durchspülen der Werkstücke, insbesondere zum Abführen von Lösemittel, und/oder ein Kühlgasstrom zum Kühlen der Werkstücke sein.

Es kann vorgesehen sein, dass ein die Werkstücke durchströmender Teilgasstrom des durch den Behandlungsraum strömenden Gasstroms durch eine oder mehrere Eintrittsöffnungen in einen Innenraum des jeweiligen Werkstücks einströmt und durch eine oder mehrere Austrittsöffnungen aus dem Innenraum ausströmt.

Eine Eintrittsöffnung ist beispielsweise eine Öffnung zur Aufnahme einer Windschutzscheibe. Mehrere Austrittsöffnungen sind dann beispielsweise Öffnungen für hintere Seitenfenster und/oder Heckfenster und/oder eine Öffnung zur Aufnahme einer Heckscheibe. Beispielsweise kann hierfür eine Absaugung vorgesehen sein, die zumindest näherungsweise mittig und/oder zentral unter einem Fahrzeugheck angeordnet ist.

Eine Eintrittsöffnung ist ferner beispielsweise eine Öffnung zur Aufnahme einer Heckscheibe. Mehrere Austrittsöffnungen sind dann beispielsweise Öffnungen für vordere Seitenfenster und/oder eine Öffnung zur Aufnahme einer Windschutzscheibe. Beispielsweise kann hierfür eine Absaugung vorgesehen sein, die zumindest näherungsweise mittig und/oder zentral unter einer Fahrzeugfront angeordnet ist.

Alternativ oder ergänzend zu den vorstehend genannten Merkmalen kann vorgesehen sein, dass der Behandlungsraum mindestens einen Wärmeabschnitt umfasst, in welchem die Werkstücke erhitzbar und/oder auf einer gegenüber einer Umgebungstemperatur erhöhten Temperatur haltbar sind.

Unter einer Umgebungstemperatur ist in dieser Beschreibung und den beigefügten Ansprüchen insbesondere eine Temperatur in der Umgebung der Behandlungsanlage, beispielsweise eine Hallentemperatur, insbesondere ungefähr 10 °C bis 40 °C oder ungefähr 20 °C bis 25 °C, zu verstehen.

Günstig kann es sein, wenn die Behandlungsanlage eine Spülvorrichtung zum Durchspülen eines Spülabschnitts des Behandlungsraums mit einem Gasstrom umfasst.

Der Gasstrom ist beispielsweise ein Frischluftstrom und/oder ein Abgasstrom aus einem Kühlabschnitt und/oder Wärmeabschnitt und/oder ein Abgasstrom aus einer Schleuse (Schleusengasstrom) der Behandlungsanlage.

Ein Frischluftstrom ist ein Gasstrom aus Frischluft. Frischluft ist insbesondere Hallenluft in einer Halle, in welcher die Behandlungsanlage angeordnet ist, und/oder Außenluft oder Umgebungsluft aus einer Umgebung der Behandlungsanlage und/oder der Halle, in welcher die Behandlungsanlage angeordnet ist.

Es kann vorgesehen sein, dass ein Gasstrom mehrfach durch den Behandlungsraum hindurchgeführt wird, insbesondere nacheinander unterschiedlichen Abschnitten des Behandlungsraums zugeführt wird.

Beispielsweise kann ein Gasstrom aus einer Kühlzone und/oder Aufheizzone und/oder Haltezone des Behandlungsraums entnommen und einer Schleuse zugeführt werden. Ein aus der Schleuse abgeführter Gasstrom ist dann beispielsweise als Spülgasstrom dem Spülabschnitt des Behandlungsraums zuführbar.

Es kann vorgesehen sein, dass der Spülabschnitt des Behandlungsraums bezüglich der Förderrichtung hinter mindestens einem Wärmeabschnitt des Behandlungsraums angeordnet ist.

Insbesondere kann vorgesehen sein, dass der Spülabschnitt des Behandlungsraums bezüglich der Förderrichtung unmittelbar im Anschluss an mindestens einen Wärmeabschnitt des Behandlungsraums angeordnet ist.

Vorteilhaft kann es sein, wenn der Spülabschnitt des Behandlungsraums bezüglich der Förderrichtung zwischen mindestens zwei Wärmeabschnitten des Behandlungsraums angeordnet ist.

Der Behandlungsraum umfasst vorzugsweise mindestens einen Wärmeabschnitt, mindestens einen Kühlabschnitt zum Kühlen der Werkstücke und mindestens einen Spülabschnitt.

Mindestens ein Spülabschnitt ist vorzugsweise bezüglich der Förderrichtung zwischen dem mindestens einen Wärmeabschnitt und dem mindestens einen Kühlabschnitt angeordnet.

Günstig kann es sein, wenn der Wärmeabschnitt, der Spülabschnitt und/oder Kühlabschnitt mittels eines oder mehrerer Trennelemente wahlweise fluidwirksam voneinander trennbar und fluidwirksam miteinander verbindbar sind.

Ein Trennelement ist insbesondere ein mechanisches Trennelement, beispielsweise ein Tor. Ferner kann ein Trennelement beispielsweise ein strömungstechnisches Trennelement, insbesondere eine Luftschleuse, sein.

Günstig kann es sein, wenn die Behandlungsanlage eine Gasführung umfasst, mittels welcher der einem Spülabschnitt des Behandlungsraums zugeführte Gasstrom nach einem Durchströmen des Spülabschnitts mindestens einem Wärmeabschnitt des Behandlungsraums zuführbar ist.

Insbesondere kann der einem Spülabschnitt des Behandlungsraums zugeführte Gasstrom nach einem Durchströmen des Spülabschnitts mehreren, insbesondere zwei, Wärmeabschnitten des Behandlungsraums zuführbar sein.

Der Gasstrom ist dabei vorzugsweise nach dem Durchströmen des Spülabschnitts teilbar, so dass jeweils ein Teilgasstrom im jeweiligen Wärmeabschnitt des Behandlungsraums zuführbar ist.

Vorteilhaft kann es sein, wenn der einem Spülabschnitt des Behandlungsraums zugeführte Gasstrom nach einem Durchströmen des Spülabschnitts mindestens einem Wärmeabschnitt des Behandlungsraums an einem einem Spülabschnitt abgewandten Ende des Wärmeabschnitts zuführbar ist.

Beispielsweise kann vorgesehen sein, dass der einem Spülabschnitt des Behandlungsraums zugeführte Gasstrom nach einem Durchströmen des Spülabschnitts zwei oder mehr Wärmeabschnitten des Behandlungsraums an dem dem Spülabschnitt abgewandten Ende des jeweiligen Wärmeabschnitts zuführbar ist. Der jeweilige Wärmeabschnitt wird dann vorzugsweise von einem dem Spülabschnitt abgewandten Ende des Wärmeabschnitts zu einem dem Spülabschnitt zugwandten Ende des Wärmeabschnitts mit dem Gasstrom durchströmt.

Vorteilhaft kann es sein, wenn die Behandlungsanlage eine Spülvorrichtung umfasst, mittels welcher einem Spülabschnitt des Behandlungsraums ein erhitzter Gasstrom zuführbar ist. Unter einem erhitzten Gasstrom ist dabei insbesondere ein Gasstrom mit einer gegenüber der Umgebungstemperatur erhöhten Temperatur zu verstehen.

Ein erhitzter Gasstrom kann beispielsweise ein aus einem Kühlabschnitt der Behandlungsanlage abgeführter Gasstrom sein.

Alternativ oder ergänzend hierzu kann vorgesehen sein, dass die Behandlungsanlage, insbesondere die Spülvorrichtung, beispielsweise ein Spülmodul, eine Heizvorrichtung zum Erhitzen des Gasstroms umfasst. Die Heizvorrichtung kann beispielsweise eine Abgasreinigungsvorrichtung umfassen, insbesondere eine regenerative thermische Oxidationsanlage. Ferner kann zum Erhitzen des Gasstroms Abwärme aus der Behandlungsanlage genutzt werden.

Günstig kann es sein, wenn ein Wärmeabschnitt mindestens eine Aufheizzone zum Aufheizen der Werkstücke und/oder mindestens eine Haltezone umfasst, in welcher eine erhöhte Temperatur der Werkstücke aufrechterhaltbar ist.

Vorzugsweise umfasst jede Aufheizzone und/oder jede Haltezone ein oder mehrere Umluftmodule zur Umwälzung des in der jeweiligen Aufheizzone und/oder Haltezone geführten Gasstroms.

Insbesondere umfasst ein Wärmeabschnitt mehrere Aufheizzonen und/oder mehrere Haltezonen, welche jeweils vorzugsweise ein oder mehrere Umluftmodule umfassen.

Es kann vorgesehen sein, dass ein Wärmeabschnitt mindestens eine Aufheizzone zum Aufheizen der Werkstücke und/oder mindestens eine Haltezone umfasst, in welcher eine erhöhte Temperatur der Werkstücke aufrechterhaltbar ist, wobei vorzugsweise jede Aufheizzone und/oder jede Haltezone eine separate Heizvorrichtung und/oder einen separaten Wärmetauscher zum Erhitzen des in der jeweiligen Aufheizzone und/oder Haltezone geführten Gasstroms umfasst.

Günstig kann es sein, wenn die Behandlungsanlage mindestens einen Wärmeabschnitt, mindestens einen Spülabschnitt und mindestens einen Kühlabschnitt umfasst, wobei der mindestens eine Wärmeabschnitt und/oder der mindestens eine Spülabschnitt bezüglich der Schwerkraftrichtung oberhalb des mindestens einen Kühlabschnitts angeordnet sind.

Günstig kann es sein, wenn ein Wärmeabschnitt und/oder ein Spülabschnitt der Behandlungsanlage vollständig oberhalb des Kühlabschnitts angeordnet sind.

Die Behandlungsanlage kann beispielsweise eine Hebevorrichtung umfassen, mittels welcher die Werkstücke auf ein Niveau des Wärmeabschnitts und/oder des Spülabschnitts anhebbar und/oder auf ein Niveau des Kühlabschnitts absenkbar sind.

Die Hebevorrichtung kann beispielsweise eine Schleuse und/oder einen Spülabschnitt der Behandlungsanlage bilden oder umfassen. Ein von dem Wärmeabschnitt und/oder dem Kühlabschnitt trennbarer Schleusenraum oder Spülraum ist dann vorzugsweise durch eine Bodenplatte der Hebevorrichtung und/oder eine seitliche Trennwand begrenzt und/oder abgedichtet. Die seitliche Trennwand trennt vorzugsweise den Schleusenraum von dem Wärmeabschnitt. Die Bodenplatte trennt vorzugsweise den Schleusenraum von dem Kühlabschnitt.

Bei einer Ausgestaltung der Erfindung kann vorgesehen sein, dass die Behandlungsanlage mindestens eine Gaszuführung umfasst, mittels welcher ein Gasstrom zumindest näherungsweise senkrecht zu einer Eintrittsebene einer Eintrittsöffnung eines Werkstücks in einen Innenraum des Werkstücks richtbar ist.

Die Eintrittsöffnung ist insbesondere ein Zugang zum Innenraum, beispielsweise eine Öffnung in einem als Fahrzeugkarosserie ausgebildeten Werkstück, wobei die Öffnung beispielsweise zur Aufnahme einer Windschutzscheibe oder Heckscheibe dient.

Die Werkstücke sind mittels der Fördervorrichtung vorzugsweise derart aufnehmbar und durch mindestens einen Wärmeabschnitt, mindestens einen Spülabschnitt und/oder mindestens einen Kühlabschnitt des Behandlungsraums förderbar, dass eine Längsrichtung der Werkstücke quer, insbesondere im Wesentlichen senkrecht, zur Förderrichtung ausgerichtet ist.

Insbesondere ist eine Fahrzeuglängsachse von als Fahrzeugkarosserien ausgebildeten Werkstücken quer, vorzugsweise senkrecht, zur Förderrichtung ausgerichtet.

Die Behandlungsanlage ist vorzugsweise eine Trockneranlage zum Trocknen von Fahrzeugkarosserien.

Insbesondere zur Ermöglichung eines energieeffizienten Betriebs der Behandlungsanlage kann vorgesehen sein, dass als Spülgasstrom ein Abgasstrom aus einem Kühlabschnitt der Behandlungsanlage verwendet wird. Hierdurch kann auf energieeffiziente Art und Weise ein erhitzter oder erwärmter Spülgasstrom bereitgestellt werden, da das durch den Kühlabschnitt geführte Gas Wärme von den zu kühlenden Werkstücken aufnimmt.

Eine Schleuse (Gasschleuse) ist vorzugsweise ein von einem Spülabschnitt verschiedener Abschnitt der Behandlungsanlage.

Eine Schleuse wird vorzugsweise von einem Schleusengasstrom durchströmt.

Der Schleusengasstrom durchströmt die Schleuse vorzugsweise zumindest näherungsweise in der Schwerkraftrichtung von oben nach unten oder von unten nach oben.

Der Schleusengasstrom schließt mit der Horizontalen vorzugsweise einen Winkel von mindestens ungefähr 30°, insbesondere mindestens ungefähr 40°, beispielsweise ungefähr 50°, ein. Alternativ oder ergänzend hierzu kann vorgesehen sein, dass der Schleusengasstrom mit der Horizontalen vorzugsweise einen Winkel von ungefähr 90°, insbesondere höchstens ungefähr 75°, beispielsweise höchstens ungefähr 60°, einschließt.

Eine Abführung und/oder Absaugung des Schleusengasstroms aus der Schleuse erfolgt vorzugsweise in einem Bodenbereich der Schleuse.

Vorzugsweise wird ein durch die Schleuse hindurch geführter Schleusengasstrom nach dem Durchströmen der Schleuse weiterverwendet, insbesondere als Spülgasstrom einem Spülabschnitt der Behandlungsanlage zugeführt.

Bei einer Ausgestaltung der Erfindung kann vorgesehen sein, dass ein Schleusengasstrom für eine Schleuse nach dem Durchströmen der Schleuse als Spülgasstrom den Werkstücken zugeführt und durch dieselben hindurchgeführt wird.

Der den Werkstücken zugeführte Spülgasstrom umfasst vorzugsweise zu mindestens ungefähr 30 %, insbesondere zu mindestens ungefähr 40 %, beispielsweise zu zumindest näherungsweise 50 %, Schleusengas des Schleusengasstroms.

Ferner kann vorgesehen sein, dass der den Werkstücken zugeführte Spülgasstrom vorzugsweise zu höchstens ungefähr 80 %, insbesondere zu höchstens ungefähr 70 %, Schleusengas des Schleusengasstroms umfasst. Der Schleusengasstrom ist vorzugsweise zumindest teilweise oder vollständig ein Frischluftstrom und/oder ein aus einem Wärmeabschnitt oder Kühlabschnitt der Behandlungsanlage abgeführter Gasstrom.

Die Werkstücke werden vorzugsweise zunächst durch mindestens einen Wärmeabschnitt des Behandlungsraums hindurchgeführt und dann mit einem Spülgasstrom durchspült. Nach dem Durchspülen werden die Werkstücke vorzugsweise mindestens einem weiteren Wärmeabschnitt des Behandlungsraums und/oder mindestens einem Kühlabschnitt des Behandlungsraums zugeführt.

Beispielsweise kann vorgesehen sein, dass die Werkstücke nach dem Durchspülen zunächst einem weiteren Wärmeabschnitt und dann einem Kühlabschnitt oder aber direkt nach dem Durchspülen dem Kühlabschnitt zugeführt werden.

Bei einer Ausgestaltung der Erfindung kann vorgesehen sein, dass ein Spülabschnitt und mindestens ein Wärmeabschnitt und/oder mindestens ein Kühlabschnitt mittels eines oder mehrerer Trennelemente fluidwirksam voneinander getrennt werden, um einen Spülvorgang durchzuführen.

Insbesondere ist hierbei ein getakteter Betrieb einer Spülvorrichtung und/oder der Fördervorrichtung vorgesehen, so dass die Werkstücke vorzugsweise einzeln oder in diskreten Gruppen nacheinander dem Spülabschnitt zuführbar sind.

Vorteilhaft kann es sein, wenn ein Gasstrom, insbesondere ein erhitzter Gasstrom (Heißgasstrom), ein Spülgasstrom und/oder ein Kühlgasstrom, in einer im Wesentlichen senkrecht zu einer Eintrittsöffnung eines Werkstücks verlaufenden Richtung in einen Innenraum des Werkstücks gerichtet wird.

Mittels der Spülvorrichtung ist vorzugsweise ein Werkstückinnenraum, insbesondere ein Karosseninnenraum, spülbar. Vorzugsweise sind hierdurch von einem Werkstück entweichendes Lösemittel und/oder sonstige leichtflüchtige Beschichtungskomponenten, Abdichtungskomponenten und/oder Klebstoffkomponenten aus dem Werkstückinnenraum entfernbar.

Vorzugsweise können mittels der Fördervorrichtung Werkstücke unterschiedlicher Art und/oder Größe durch den Behandlungsraum hindurch gefördert werden.

Mindestens eine Einlassöffnung zum Zuführen von Gas zu dem Behandlungsraum umfasst vorzugsweise eine Düse oder ist durch eine Düse gebildet.

Günstig kann es sein, wenn mindestens eine Einlassöffnung zum Zuführen von Gas zu dem Behandlungsraum eine Weitwurfdüse umfasst oder durch eine Weitwurfdüse gebildet ist.

Eine Weitwurfdüse umfasst vorzugsweise einen Düseneingang und einen Düsenausgang, wobei der Düsenausgang vorzugsweise eine größere Querschnittsfläche aufweist als der Düseneingang und/oder wobei zwischen dem Düseneingang und dem Düsenausgang vorzugsweise ein sich stetig erweiternder, insbesondere stetig zunehmend erweiternder, Gasführungsabschnitt vorgesehen ist.

Vorteilhaft kann es sein, wenn die Weitwurfdüse ein Strömungsbeeinflussungselement, beispielsweise in Form eines Zentralkörpers, umfasst.

Der Zentralkörper ist vorzugsweise mittig bezüglich einer senkrecht zur Strömungsrichtung in der Düse ausgerichteten Ebene im Bereich des Düsenausgangs der Düse angeordnet.

Beispielsweise ist der Zentralkörper im Wesentlichen kegelförmig und sich längs der Strömungsrichtung erweiternd ausgebildet.

Die Düse und/oder der Zentralkörper sind vorzugsweise rotationssymmetrisch um eine gemeinsame Rotationsachse ausgebildet und/oder angeordnet.

Weitere bevorzugte Merkmale einer Weitwurfdüse sind beispielsweise in der WO 2014/063797 A1 genannt, deren gesamte Beschreibung hiermit durch Inbezugnahme zum Bestandteil der vorliegenden Erfindung gemacht wird.

Eine Düse kann beispielsweise eine rechteckige, runde, ovale oder längliche Querschnittsform aufweisen.

Vorzugsweise ist die Düse hinsichtlich ihrer Position und/oder Ausrichtung verstellbar an einer Wandung, insbesondere einer Trennwand, Seitenwand, Bodenwand und/oder Deckenwand, eines den Behandlungsraum begrenzenden Gehäuses angeordnet. Beispielsweise können ebene Bleche und/oder Langlöcher in der jeweiligen Wand vorgesehen sein, um die Position und/oder Ausrichtung der mindestens einen Düse einstellen zu können.

Günstig kann es sein, wenn ein oder mehrere Einlassöffnungen mittels Abdeckelementen, insbesondere Klappen, verschließbar sind.

Vorzugsweise ergibt sich eine gleichmäßigere Aufheizung und/oder ein gleichmäßigeres Abkühlen der Werkstücke durch turbulente Strömung im jeweiligen Werkstückinnenraum.

Günstig kann es sein, wenn eine Beaufschlagung von sensiblen Werkstückbereichen, beispielsweise Bereiche dünnen Blechs (insbesondere im Dachbereich einer Fahrzeugkarosserie), mit dem Heißgasstrom vermieden wird oder zumindest reduziert wird.

Vorzugsweise ergibt sich eine reduzierte Anströmung der Fördervorrichtung, wodurch ein geringerer Schmutzaustrag aus einer Förderkette der Fördervorrichtung oder einem sonstigen Förderelement der Fördervorrichtung resultieren kann.

Günstig kann es sein, wenn ein Strömungsweg zwischen der mindestens einen Einlassöffnung und der mindestens einen Auslassöffnung verkürzt ist, wodurch sich eine verbesserte Trocknerbalance ergeben kann.

Durch eine gezielte lokale Absaugung (Abführung des Gasstroms durch eine oder mehrere Auslassöffnungen) können vorzugsweise lokal erhöhte Strömungsgeschwindigkeiten erhalten werden, um eine bevorzugte Anströmung der Werkstücke zu erzielen.

Die Spülvorrichtung und/oder eine Schleuse kann beispielsweise ein oder mehrere Trennelemente umfassen, welche durch ein Flügeltor, ein Rolltor oder ein Hubtor gebildet sind. Dabei kann vorgesehen sein, dass jeweils ein Trennelement bezüglich der Förderrichtung vor und/oder hinter dem zu behandelnden Werkstück angeordnet ist, um dieses während des Spülvorgangs und/oder Schleusendurchgangs einzuschließen.

Bei einer Ausgestaltung der Erfindung kann vorgesehen sein, dass auf eine mechanische Abtrennung (mechanisches Trennelement) von dem Wärmeabschnitt verzichtet wird. Beispielsweise wird ein letztes Modul, welches eine Heizzone oder Haltezone bildet, als Spülmodul ausgebildet. Ein solches Spülmodul ist insbesondere im Frischluft-Abluftbetrieb betreibbar.

Ein Gas in einem Kühlabschnitt der Behandlungsvorrichtung ist vorzugsweise lösemittelfrei. Ein aus dem Kühlabschnitt abgeführter Abgasstrom ist somit vorzugsweise in der Behandlungsanlage wiederverwendbar, beispielsweise als ein einem Wärmeabschnitt und/oder Spülabschnitt zuzuführender Gasstrom.

Günstig kann es sein, wenn die Fördervorrichtung einen Kettenförderer umfasst.

Eine Förderkette ist vorzugsweise in einem Boden des den Behandlungsraum umgebenden Gehäuses integriert, insbesondere eingelassen.

Die Werkstücke sind beispielsweise mittels jeweils eines Skids an der Fördervorrichtung angeordnet und/oder aufgenommen.

Günstig kann es sein, wenn ein Skid zur Aufnahme eines oder mehrerer Werkstücke derart an der Fördervorrichtung anordenbar und mittels derselben förderbar ist, dass Längsachsen von Skidkufen des Skids im Wesentlichen parallel zur Förderrichtung ausgerichtet sind.

Alternativ hierzu kann ferner vorgesehen sein, dass ein Skid zur Aufnahme eines oder mehrerer Werkstücke derart an der Fördervorrichtung anordenbar und mittels derselben förderbar ist, dass Längsachsen von Skidkufen des Skids quer, insbesondere im Wesentlichen senkrecht, zur Förderrichtung ausgerichtet sind.

Günstig kann es sein, wenn ein oder mehrere Werkstücke derart an einem Skid anordenbar und mittels des Skids an der Fördervorrichtung aufnehmbar und/oder mittels derselben förderbar sind, dass eine Werkstücklängsachse parallel oder quer, insbesondere im Wesentlichen senkrecht, zu Längsachsen von Skidkufen des Skids und/oder parallel oder quer, insbesondere im Wesentlichen senkrecht, zur Förderrichtung ausgerichtet ist.

Eine Unterkante eines Skids liegt vorzugsweise auf oder knapp über einem Bodenniveau des Behandlungsraums.

Günstig kann es sein, wenn die Fördervorrichtung eine Kombination aus einer Skid-Fördervorrichtung und einer skidlosen Fördervorrichtung ist.

Es kann jedoch auch ausschließlich eine Skid-Fördervorrichtung oder eine skidlose Fördervorrichtung vorgesehen sein.

Wenn sowohl eine Skid-Fördervorrichtung als auch eine skidlose Fördervorrichtung vorgesehen ist, kann vorgesehen sein, dass die Behandlungsanlage eine Umsetzvorrichtung zum Umsetzen der Werkstücke von einem Skid auf eine skidlose Fördervorrichtung umfasst.

Günstig kann es sein, wenn die Behandlungsanlage ein oder mehrere Blindmodule umfasst, welche Abschnitte des Behandlungsraums bilden, jedoch weder beheizt werden noch mit Einlassöffnungen oder Auslassöffnungen versehen sind. Hierdurch ist insbesondere eine Vergleichmäßigung der Wärme erzielbar.

Bei einer Ausgestaltung der Erfindung kann vorgesehen sein, dass die Behandlungsanlage eine zentrale oder übergeordnete Heizvorrichtung umfasst.

Insbesondere kann vorgesehen sein, dass mehrere Umluftaggregate und/oder Spülgasaggregate thermisch mit der Heizvorrichtung gekoppelt sind. Beispielsweise kann eine Heißgasleitung vorgesehen sein, mittels welcher Heißgas (erhitztes Gas) von der Heizvorrichtung zu den Umluftaggregaten und/oder Spülgasaggregaten zuführbar ist.

Ein oder mehrere Umluftaggregate und/oder ein oder mehrere Spülgasaggregate umfassen vorzugsweise jeweils einen oder mehrere Wärmetauscher, welchen einerseits ein dem Behandlungsraum zuzuführender Gasstrom und andererseits ein Heißgasstrom, insbesondere ein von der Heizvorrichtung stammender Heißgasstrom, zuführbar sind.

Mittels des einen oder der mehreren Wärmetauscher ist ein dem Behandlungsraum zuzuführender Gasstrom vorzugsweise indirekt erhitzbar.

Die Heizvorrichtung kann beispielsweise eine thermische Abgasreinigungsvorrichtung sein, insbesondere zur Reinigung von aus dem Behandlungsraum abgeführtem Abgas.

Durch geeignete Ventile und/oder Klappen kann vorzugsweise eine gewünschte Heizwirkung in den einzelnen Umluftaggregaten und/oder Spülgasaggregaten gezielt eingestellt, insbesondere gesteuert und/oder geregelt, werden.

Die Behandlungsanlage umfasst vorzugsweise ferner Folgendes:
einen Behandlungsraum, welcher mehrere Behandlungsraumabschnitte umfasst, die jeweils einem von mehreren separaten Umluftmodulen der Behandlungsanlage zugeordnet sind;
eine Heizanlage, welche vorzugsweise eine in sich geschlossene Heizgasführung umfasst, wobei mehrere Umluftmodule mit der Heizgasführung gekoppelt sind, insbesondere zum Erhitzen des durch die Behandlungsraumabschnitte geführten Gases.

Dadurch, dass die Behandlungsanlage vorzugsweise eine Heizanlage mit einer in sich geschlossenen Heizgasführung umfasst, welche mit den Umluftmodulen gekoppelt ist, ist das den Behandlungsraumabschnitten zuzuführende Gas einfach und effizient erhitzbar. Die Behandlungsanlage kann hierdurch vorzugsweise besonders energieeffizient betrieben werden.

Die Heizgasführung ist vorzugsweise ringförmig geschlossen ausgebildet, so dass zumindest ein Teilgasstrom eines in der Heizgasführung geführten Heizgasstroms mehrfach die Heizgasführung durchströmt.

Das Heizgas ist vorzugsweise Rohgas und/oder Reingas, welches zur Verwendung in dem Behandlungsraum, das heißt zum Durchströmen des Behandlungsraums, geeignet und/oder vorgesehen ist.

Das Heizgas weist vorzugsweise zumindest unmittelbar stromaufwärts der Behandlungsraumabschnitte eine gegenüber dem Gasstrom in den Umluftmodulen und/oder Behandlungsraumabschnitten erhöhte Temperatur auf.

Vorzugsweise ist das Heizgas kein Abgas einer Heizvorrichtung der Heizanlage, insbesondere kein Verbrennungsabgas.

Unter einer "in sich geschlossenen Heizgasführung" ist insbesondere eine Heizgasführung zu verstehen, in welcher zumindest ein Teil eines Heizgasstroms in einem Kreislauf geführt wird. Unabhängig davon kann vorzugsweise auch bei einer in sich geschlossenen Heizgasführung eine kontinuierliche oder phasenweise Zuführung von Frischgas zu dem Heizgasstrom und/oder Abführung von Heizgas aus dem Heizgasstrom vorgesehen sein.

Günstig kann es sein, wenn eine Zuführung von Frischgas und eine Abführung von Heizgas, das heißt ein Austausch von Heizgas, vorzugsweise so dimensioniert sind, dass bei einem einmaligen Durchlauf des Heizgasstroms durch die Heizgasführung mindestens 40%, vorzugsweise mindestens ungefähr 50%, insbesondere mindestens ungefähr 80%, beispielsweise mindestens ungefähr 90%, des an einer bestimmten Stelle der Heizgasführung vorbeiströmenden Heizgasstroms nach dem vollständigen Durchlauf erneut zu dieser Stelle gelangen.

Die Zuführung von Frischgas und/oder die Abführung von Heizgas aus dem Heizgasstrom erfolgt vorzugsweise ausschließlich in den Behandlungsraumabschnitten und/oder den Umluftmodulen der Behandlungsanlage.

Es kann jedoch auch vorgesehen sein, dass der Heizanlage eine Frischgaszuführung und/oder eine Abgasabführung zugeordnet ist, mittels welchen außerhalb der Behandlungsraumabschnitte und/oder außerhalb der Umluftmodule Frischgas zugeführt bzw. Heizgas aus dem Heizgasstrom abgeführt werden kann.

Die Umluftmodule und/oder die Behandlungsraumabschnitte sind vorzugsweise Bestandteil der Heizgasführung.

Insbesondere ist das Heizgas vorzugsweise zumindest teilweise mehrfach durch die Behandlungsraumabschnitte hindurchführbar, bevor es (erneut) den außerhalb der Umluftmodule und/oder außerhalb der Behandlungsraumabschnitte liegenden Teil der Heizgasführung durchströmt.

Bei einer Ausgestaltung der Erfindung kann vorgesehen sein, dass die Heizgasführung eine Umluftführung umfasst, welche abschnittsweise durch mehrere parallel angeordnete Umluftmodule und/oder Behandlungsraumabschnitte gebildet ist.

In den Umluftmodulen und/oder Behandlungsraumabschnitten ist vorzugsweise ein Gasstrom in einem Umluftkreislauf führbar, welchem Heizgas aus der Heizgasführung zuführbar ist. Vorzugsweise ist ein Teilgasstrom des im Kreislauf geführten Gasstroms eines jeden Umluftmoduls und/oder Behandlungsraumabschnitts aus dem Umluftmodul und/oder dem Behandlungsraumabschnitt abführbar, mittels der Heizgasführung in einem geschlossenen Kreislauf führbar und schließlich als Teil des Heizgasstroms erneut einem oder mehreren Umluftmodulen und/oder Behandlungsraumabschnitten zuführbar.

Eine Wärmezufuhr zu den einzelnen Umluftaggregaten und/oder Spülgasaggregaten kann vorzugsweise direkt, insbesondere durch die unmittelbare Zuführung von Heizgas, oder indirekt, insbesondere durch Wärmeübertragung von einem Heizgas oder Heißgas auf den dem Behandlungsraum zuzuführenden Gasstrom, erfolgen.

Das Heizgas kann beispielsweise mittels eines Wärmeübertragers thermisch mit einem Heißgas der Heizvorrichtung, insbesondere einem Abgas der Heizvorrichtung, gekoppelt werden, um Wärme von dem Heißgas, insbesondere dem Abgas der Heizvorrichtung, auf das Heizgas zu übertragen.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Darstellung der Funktionsweise einer ersten Ausführungsform einer Behandlungsanlage zum Behandeln von Werkstücken;
- Fig. 2: eine schematische perspektivische teilweise geschnittene Darstellung einer zweiten Ausführungsform einer Behandlungsanlage;
- Fig. 3: eine weitere schematische perspektivische Schnittdarstellung der Behandlungsanlage aus Fig. 2;
- Fig. 4: eine weitere schematische perspektivische Schnittdarstellung der Behandlungsanlage aus Fig. 2;
- Fig. 5: einen horizontalen Schnitt durch die Behandlungsanlage aus Fig. 2;
- Fig. 6: einen schrägen Schnitt durch die Behandlungsanlage aus Fig. 2;
- Fig. 7: einen horizontalen Schnitt durch mehrere Module der Behandlungsanlage aus Fig. 2;
- Fig. 8: einen schematischen vertikalen Schnitt durch die Behandlungsanlage aus Fig. 2, wobei ein Werkstück in einem Behandlungsraum der Behandlungsanlage angeordnet ist;
- Fig. 9: eine der Fig. 8 entsprechende schematische Darstellung der Behandlungsanlage aus Fig. 2, wobei ein anders geformtes und/oder dimensioniertes Werkstück in dem Behandlungsraum angeordnet ist;
- Fig. 10: eine schematische perspektivische Darstellung von Einlassöffnungen und einer Auslassöffnung der Behandlungsanlage sowie eines zu behandelnden Werkstücks;
- Fig. 11: einen schematischen vertikalen Schnitt durch eine Behandlungsanlage, bei welcher eine Querförderung und eine Gaszufuhr durch eine Deckenwand vorgesehen sind;
- Fig. 12: einen schematischen vertikalen Schnitt durch eine Behandlungsanlage, bei welcher eine Querförderung und eine Gaszuführung durch eine vertikale Seitenwand vorgesehen sind;
- Fig. 13: einen schematischen vertikalen Schnitt durch eine Behandlungsanlage, wobei eine Querförderung und eine Gaszuführung durch eine konturangepasste Trennwand vorgesehen sind;
- Fig. 14: einen schematischen vertikalen Schnitt durch eine Behandlungsanlage, wobei eine Querförderung und eine horizontale Gaszuführung zu einem unteren Vorderbereich des Werkstücks vorgesehen sind;
- Fig. 15: einen schematischen vertikalen Schnitt durch eine Behandlungsanlage, wobei eine Querförderung und drei Einlassöffnungen zur Gaszuführung durch eine Bodenwand der Behandlungsanlage vorgesehen sind;
- Fig. 16: einen schematischen vertikalen Schnitt durch eine Behandlungsanlage, wobei eine Querförderung und eine Gasabführung über eine in der Bodenwand angeordnete Auslassöffnung vorgesehen sind;
- Fig. 17: einen schematischen vertikalen Schnitt durch eine Behandlungsanlage, wobei eine Querförderung und eine Gasabführung über eine in einer Seitenwand angeordnete Auslassöffnung vorgesehen sind;
- Fig. 18: einen schematischen vertikalen Schnitt durch eine Behandlungsanlage, wobei eine Querförderung und eine längs der Förderrichtung erfolgende seitliche Gasabführung vorgesehen sind;
- Fig. 19: einen schematischen vertikalen Schnitt durch eine Behandlungsanlage, wobei eine Querförderung und eine Gaszuführung sowie eine Gasabführung derart vorgesehen sind, dass eine im Wesentlichen diagonale Durchströmung des Behandlungsraums erfolgt;
- Fig. 20: einen schematischen vertikalen Schnitt durch eine Behandlungsanlage, wobei eine Längsförderung und eine Gaszuführung gemäß der Ausführungsform in Fig. 11 vorgesehen sind;
- Fig. 21: einen schematischen vertikalen Schnitt durch eine Behandlungsanlage, wobei eine Längsförderung und eine Gaszuführung gemäß der in Fig. 15 dargestellten Ausführungsform vorgesehen sind;
- Fig. 22: einen schematischen vertikalen Schnitt durch eine Behandlungsanlage, wobei eine Längsförderung und eine Gasabführung gemäß der in Fig. 16 dargestellten Ausführungsform vorgesehen sind;
- Fig. 23: einen schematischen vertikalen Schnitt durch eine Behandlungsanlage, wobei eine Längsförderung und eine senkrecht zur Förderrichtung gerichtete seitliche Gasabführung vorgesehen sind;
- Fig. 24: einen schematischen vertikalen Schnitt durch eine Behandlungsanlage, wobei eine Längsförderung und eine Gaszuführung gemäß der in Fig. 19 dargestellten Ausführungsform vorgesehen sind;
- Fig. 25: eine schematische perspektivische teiltransparente Darstellung einer kaskadierten Gasführung;
- Fig. 26: eine schematische Darstellung einer alternativen Ausführungsform einer Gasführung der Behandlungsanlage;
- Fig. 27: eine schematische Darstellung einer weiteren alternativen Ausführungsform einer Gasführung der Behandlungsanlage;
- Fig. 28: eine schematische Draufsicht auf eine Fördervorrichtung, welche eine Umsetzvorrichtung umfasst;
- Fig. 29: eine schematische Draufsicht auf eine Fördervorrichtung, bei welcher zwei Umsetzvorrichtungen vorgesehen sind;
- Fig. 30: eine schematische Draufsicht auf eine weitere Ausführungsform einer Fördervorrichtung, bei welcher zwei Rotationsvorrichtungen vorgesehen sind;
- Fig. 31: eine schematische Seitenansicht einer weiteren Ausführungsform einer Fördervorrichtung, bei welcher eine Rotationsvorrichtung, eine Hebevorrichtung und eine Umsetzvorrichtung vorgesehen sind; und
- Fig. 32: eine schematische Draufsicht auf eine weitere alternative Ausführungsform einer Fördervorrichtung, bei welcher eine in einem Behandlungsraum angeordnete Rotationsvorrichtung vorgesehen ist.

Gleiche oder funktional äquivalente Elemente sind in sämtlichen Figuren mit denselben Bezugszeichen versehen.

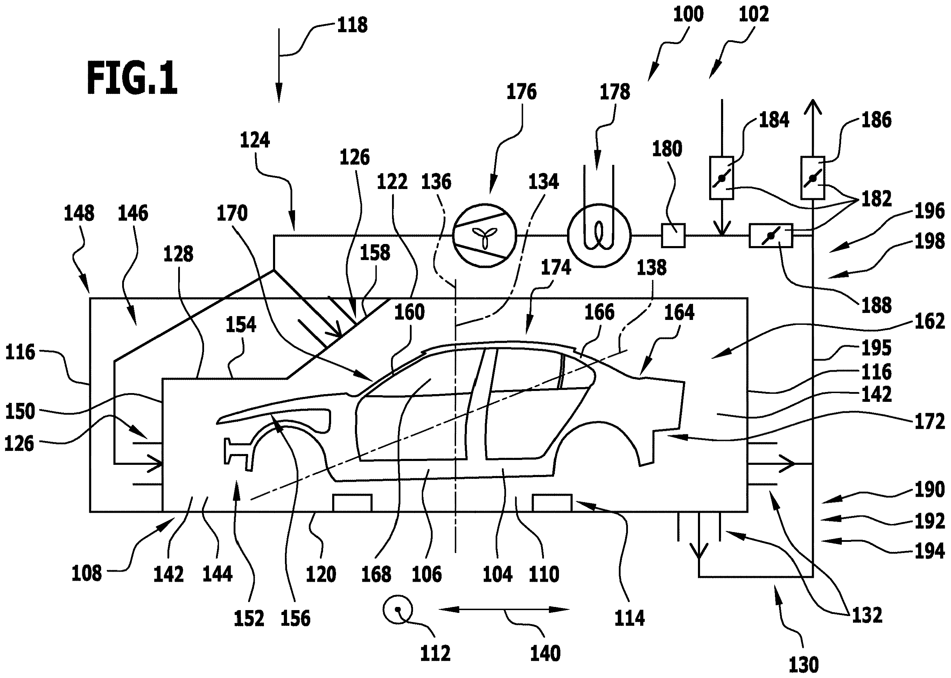

Eine in Fig. 1 dargestellte Ausführungsform einer als Ganzes mit 100 bezeichneten Behandlungsanlage ist beispielsweise eine Trockneranlage 102 zum Trocknen von beschichten Werkstücken 104.

Die Werkstücke 104 sind beispielsweise Fahrzeugkarosserien 106. Die Beschichtung ist beispielsweise eine Lackierung.

Die Behandlungsanlage 100 umfasst ein Gehäuse 108, welches einen Behandlungsraum 110 umgibt.

Der Behandlungsraum 110 dient der Aufnahme eines oder mehrerer Werkstücke 104.

Insbesondere sind die Werkstücke 104 längs einer Förderrichtung 112 durch den Behandlungsraum 110 hindurchförderbar.

Die Behandlungsanlage 100 umfasst hierzu insbesondere eine Fördervorrichtung 114, beispielsweise einen Kettenförderer.

Die Werkstücke 104 sind vorzugsweise mittels eines Skids oder auch skidlos an der Fördervorrichtung 114 anordenbar und mit derselben längs der Förderrichtung 112 bewegbar.

Das Gehäuse 108 umfasst zwei bezüglich der Förderrichtung 112 seitliche Seitenwände 116, eine bezüglich einer Schwerkraftrichtung 118 unten angeordnete Bodenwand 120 und eine bezüglich der Schwerkraftrichtung 118 oben angeordnete Deckenwand 122.

Das Gehäuse 108 ist insbesondere im Wesentlichen quaderförmig ausgebildet.

Für eine effiziente Behandlung des Werkstücks 104 ist dem Behandlungsraum 110 vorzugsweise ein Gasstrom zuführbar.

Hierzu umfasst die Behandlungsanlage 100 eine Gaszuführung 124.

Die Gaszuführung 124 umfasst vorzugsweise mehrere Einlassöffnungen 126, welche beispielsweise in einer Seitenwand 116 oder einer noch zu beschreibenden Trennwand 128 des Gehäuses 108 angeordnet sind.

Ferner umfasst die Behandlungsanlage 100 vorzugsweise eine Gasabführung 130, welche insbesondere mehrere Auslassöffnungen 132 umfasst.

Die Auslassöffnungen 132 können beispielsweise in einer Seitenwand 116 und/oder in der Bodenwand 120 angeordnet sein.

Bei weiteren Ausführungsformen können die Einlassöffnungen 126 und die Auslassöffnungen 132 jedoch auch anders positioniert sein. Beispielsweise kann auch eine Anordnung von Einlassöffnungen 126 und/oder Auslassöffnungen 132 in der Deckenwand 122 vorgesehen sein.

Im Sinne einer optimalen Durchströmung der Werkstücke 104 mit dem Gasstrom sind die Einlassöffnungen 126 einerseits und die Auslassöffnungen 132 andererseits vorzugsweise auf einander gegenüberliegenden Seiten des Werkstücks 104 angeordnet.

Insbesondere sind die Einlassöffnungen 126 einerseits und die Auslassöffnungen 132 andererseits auf einander gegenüberliegenden Seiten einer Werkstückquermittelebene 134, einer vertikalen Längsmittelebene 136 des Behandlungsraums 110 und/oder einer Diagonalebene 138 des Behandlungsraums 110 angeordnet.

Die Werkstückquermittelebene 134 ist insbesondere eine Ebene, welche senkrecht zu einer Werkstücklängsrichtung 140 ausgerichtet ist und durch einen bezüglich der Werkstücklängsrichtung 140 mittig angeordneten geometrischen Mittelpunkt oder Schwerkpunkt des Werkstücks 104 verläuft.

Die Werkstücklängsrichtung 140 ist dabei insbesondere eine Fahrzeuglängsrichtung, längs welcher ein die Fahrzeugkarosserie 106 umfassendes Fahrzeug in einem Geradeauslauf fährt.

Die vertikale Längsmittelebene 136 des Behandlungsraums 110 ist vorzugsweise eine Ebene, welche parallel zur Förderrichtung 112 und längs der Schwerkraftrichtung 118 verläuft. Die vertikale Längsmittelebene 136 schneidet dabei den Behandlungsraum 110 vorzugsweise in zwei gleichgroße Halbräume 142. Alternativ oder ergänzend hierzu kann vorgesehen sein, dass die vertikale Längsmittelebene 136 durch eine geometrische Mitte des Behandlungsraums 110 verläuft, insbesondere bezogen auf eine maximale oder durchschnittliche horizontale Quererstreckung des Behandlungsraums 110 in einer senkrecht zur Förderrichtung 112 und horizontal verlaufenden Richtung.

Die Behandlungsanlage 100 umfasst vorzugsweise ein Gehäuse 108, dessen Innenraum 144 zweigeteilt ist. Insbesondere ist der Innenraum 144 mittels der Trennwand 128 in einerseits den Behandlungsraum 110 und andererseits einen Verteilerraum 146 einer Verteilervorrichtung 148 der Behandlungsanlage 100 geteilt.

Die Trennwand 128 verläuft dabei vorzugsweise parallel zur Förderrichtung 112 und ist vorzugsweise zumindest abschnittsweise an eine Kontur des Werkstücks 104 angepasst.

Insbesondere umfasst die Trennwand 128 einen vertikalen Abschnitt 150, welcher sich in vertikaler Richtung 118 vor einer Fahrzeugfront 152 des als Fahrzeugkarossiere 106 ausgebildeten Werkstücks 104 erstreckt.

Alternativ oder ergänzend hierzu kann vorgesehen sein, dass die Trennwand 128 einen horizontalen Abschnitt 154 umfasst, welcher sich im Wesentlichen horizontal und zumindest näherungsweise längs einer Fronthaube 156 des als Fahrzeugkarosserie 106 ausgebildeten Werkstücks 104 erstreckt.

Ferner kann alternativ oder ergänzend hierzu vorgesehen sein, dass die Trennwand 128 einen schrägen Abschnitt 158 umfasst, welcher schräg zur Schwerkraftrichtung 118 ausgerichtet ist und zumindest näherungsweise parallel zu einer A-Säule 160 des als Fahrzeugkarosserie 106 ausgebildeten Werkstücks 104 verläuft.

Bei einer alternativen Ausgestaltung der Behandlungsanlage 100 kann eine Trennwand 128 ferner derart vorgesehen sein, dass diese an die Kontur eines Fahrzeughecks 162 des als Fahrzeugkarosserie 106 ausgebildeten Werkstücks 104 angepasst ist.

Insbesondere verläuft der vertikale Abschnitt 150 der Trennwand 128 dann in vertikaler Richtung längs des Fahrzeughecks 162.

Ferner kann dann vorgesehen sein, dass der horizontale Abschnitt 154 der Trennwand 128 sich zumindest näherungsweise längs einer Heckhaube 164 des als Fahrzeugkarosserie 106 ausgebildeten Werkstücks 104 erstreckt.

Zudem kann vorgesehen sein, dass der schräge Abschnitt 158 der Trennwand 128 dann im Wesentlichen parallel zu einer C-Säule 166 des als Fahrzeugkarosserie 106 ausgebildeten Werkstücks 104 verläuft.

Mittels der Gaszuführung 124 und der Gasabführung 130 ist der Behandlungsraum 110 vorzugsweise im Wesentlichen diagonal und quer, insbesondere senkrecht, zur Förderrichtung 112 mit einem Gasstrom durchströmbar.

Die Einlassöffnungen 126 und die Auslassöffnungen 132 sind dabei vorzugsweise derart angeordnet, dass ein Werkstückinnenraum 168 vorzugsweise zumindest abschnittsweise längs der Werkstücklängsrichtung 140 mit dem Gasstrom durchströmt wird.

Hierzu ist insbesondere eine Einlassöffnung 126 in dem schrägen Abschnitt 158 der Trennwand 128 derart vorgesehen, dass der durch diese Einlassöffnung 126 in den Behandlungsraum 110 einströmende Gasstrom in eine Eintrittsöffnung 170 des Werkstücks 104 gerichtet ist.

Die Eintrittsöffnung 170 ist insbesondere eine zwischen zwei A-Säulen 160 des als Fahrzeugkarosserie 106 ausgebildeten Werkstücks 104 angeordnete Öffnung zur Anordnung einer Frontscheibe.

Alternativ hierzu kann auch eine Eintrittsöffnung 170 zwischen zwei C-Säulen 166 und/oder (nicht dargestellten) D-Säulen vorgesehen sein.

Mittels der Einlassöffnungen 126 ist somit insbesondere ein Gasstrom direkt in den Werkstückinnenraum 168 richtbar.

Eine oder mehrere im vertikalen Abschnitt 150 angeordnete Einlassöffnungen 126 dienen vorzugsweise der Zuführung des Gasstroms zu der Fahrzeugfront 152 in einer im Wesentlichen horizontalen Richtung.

Eine oder mehrere Austrittsöffnungen 172 des Werkstücks 104 sind vorzugsweise im Bereich des Fahrzeughecks 162 angeordnet.

In den dem Fahrzeugheck 162 nahen Bereichen der Seitenwand 116 und/oder der Bodenwand 120 sind vorzugsweise die eine oder die mehreren Auslassöffnungen 132 angeordnet, um einen Gasstrom gezielt durch die eine oder die mehreren Austrittsöffnungen 172 aus dem Werkstück 104 abführen zu können.

Das Werkstück 104, insbesondere die Fahrzeugkarosserie 106, ist somit vorzugsweise in Werkstücklängsrichtung 140 von vorne nach hinten mit einem Gasstrom durchströmbar.

Alternativ kann jedoch auch eine entgegengesetzte Durchströmung vorgesehen sein.

Durch die gewählte Durchströmung des Werkstücks 104 kann vorzugsweise vermieden werden, dass das Werkstück 104, insbesondere die Fahrzeugkarosserie 106, in einem Dachbereich 174 unerwünscht stark erhitzt wird. Zudem kann hierdurch vorzugsweise eine gleichmäßige Wärmezufuhr zu dem Werkstück 104 bewirkt werden.

Die eigentliche Wärmezufuhr erfolgt insbesondere durch Übertragung von Wärme von dem zugeführten Gasstrom auf das Werkstück 104.

Der Gasstrom ist somit insbesondere ein erhitzter Gasstrom, wenn dieser über die Einlassöffnungen 126 dem Behandlungsraum 110 zugeführt wird.

Zur Bereitstellung des Gasstroms umfasst die Behandlungsanlage 100 vorzugsweise eine Gebläsevorrichtung 176, eine Heizvorrichtung 178, eine Abscheidevorrichtung 180 und/oder ein oder mehrere Ventile 182.

Mittels der Gebläsevorrichtung 176 ist insbesondere der Gasstrom antreibbar.

Mittels der Heizvorrichtung 178 ist der Gasstrom vorzugsweise direkt oder indirekt erwärmbar. Die Heizvorrichtung 178 kann insbesondere eine thermische Abgasreinigungsvorrichtung, eine regenerative thermische Oxidationsvorrichtung, einen Stützbrenner, eine Mikrogasturbine und/oder eine sonstige Verbrennungsvorrichtung umfassen.

Die Abscheidevorrichtung 180 dient vorzugsweise der Entfernung von Verunreinigungen aus dem Gasstrom, insbesondere um eine unerwünschte Beaufschlagung des beschichteten Werkstücks 104 mit Verunreinigungen zu vermeiden.

Die Abscheidevorrichtung 180 ist beispielsweise eine Filtervorrichtung.

Das eine oder die mehreren Ventile 182 dienen vorzugsweise der wahlweisen Zuführung von Frischluft, der Abführung von Abluft und/oder der vollständigen oder teilweisen Umluftführung.

In dieser Beschreibung und den beigefügten Ansprüchen wird der Begriff "Luft" nicht zwingend zur Bezeichnung des atmosphärischen Stickstoff-Sauerstoff-Gemisches verwendet. Vielmehr kann ganz allgemein ein beliebiges Gas vorgesehen sein. Insbesondere der Begriff "Umluft" bezeichnet vorzugsweise lediglich eine Führung eines Gasstroms in einem geschlossenen Kreislauf.

Vorzugsweise umfasst die Behandlungsanlage 100 ein als Zuführventil 184 ausgebildetes Ventil 182.

Mittels des Zuführventils 184 kann vorzugsweise ein Frischluftstrom zugeführt werden.

Ferner kann vorzugsweise ein Abführventil 186 vorgesehen sein. Mittels des Abführventils 186 ist insbesondere der Gasstrom abführbar und/oder an die Umgebung abgebbar.

Mittels eines als Umluftventil 188 ausgebildeten Ventils 182 kann der Gasstrom vorzugsweise in einem Kreislauf geführt werden. Insbesondere ist eine vorgegebene Gasmenge dann mehrfach durch den Behandlungsraum 110 hindurchführbar.

Durch geeignete Stellung der Ventile 182 kann dabei ferner eine regelmäßige Gaszuführung und regelmäßige Gasabführung vorgesehen sein, um stets zumindest einen Teil des durch den Behandlungsraum 110 hindurchgeführten Gases zu ersetzen. Insbesondere kann hierdurch eine unerwünscht hohe Schadstoffkonzentration vermieden werden.

Eine effiziente Gasführung ist insbesondere dann möglich, wenn die über die Auslassöffnungen 132 abgeführten Teilgasströme beispielsweise mittels einer Sammelvorrichtung 190, insbesondere einem Sammelkanal 192, zusammengeführt und dann gemeinsam weitergeführt werden.

Der Sammelkanal 192 kann insbesondere auch ein Abführkanal 194 sein.

Mittels eines Rückführkanals 195 sind die zusammengeführten Teilgasströme vorzugsweise gemeinsam weiterführbar, insbesondere dem Abführventil 186 zuführbar und an die Umgebung abgebbar oder, insbesondere über die Gebläsevorrichtung 176, erneut dem Behandlungsraum 110 zuführbar.

Insbesondere dann, wenn die Ventile 182 derart eingestellt sind, dass zumindest ein Großteil des durch den Behandlungsraum 110 hindurchgeführten Gasstroms in einem Umluftkreislauf geführt wird, ist der in Fig. 1 dargestellte Teil der Behandlungsanlage 100 ein Umluftmodul 196.

Wenn hingegen im Wesentlichen ausschließlich Frischluft oder Frischgas zu dem Behandlungsraum 110 zugeführt wird, ist der in Fig. 1 dargestellte Teil der Behandlungsanlage 100 vorzugsweise ein Spülmodul 198.

Die in Fig. 1 dargestellte Behandlungsanlage 100 funktioniert insbesondere wie folgt:
Mittels der Gebläsevorrichtung 176 wird ein Gasstrom in den Verteilerraum 146 eingeleitet und dort den Einlassöffnungen 126 zugeführt.

Über die Einlassöffnungen 126 gelangt der Gasstrom dann in den Behandlungsraum 110.

Die Einlassöffnungen 126 sind beispielsweise so angeordnet und/oder ausgebildet, dass der Gasstrom beispielsweise in Form von mehreren Teilgasströmen gezielt in den Werkstückinnenraum 168 des Werkstücks 104 einströmen kann.

Der Gasstrom durchströmt dann den Werkstückinnenraum 168 zumindest näherungsweise längs der Werkstücklängsrichtung 140 und wird dann über die Auslassöffnungen 132 aus dem Behandlungsraum 110 abgeführt.

Durch eine derartige Durchströmung der Werkstücke 104 kann insbesondere ein gleichmäßiger Wärmeübertrag von dem Gasstrom auf das eine oder die mehreren Werkstücke 104 ermöglicht werden. Vorzugsweise können hierdurch überhitzte Bereiche und zu kühle Bereiche des jeweiligen Werkstücks 104 vermieden werden.

Wie aus Fig. 1 hervorgeht, werden die Werkstücke 104 in der Förderrichtung 112 durch den Behandlungsraum 110 hindurchgeführt, insbesondere derart, dass die Werkstücklängsrichtung 140 senkrecht zur Förderrichtung 112 ausgerichtet ist.

Vorzugsweise ist dabei eine getaktete Förderung der Werkstücke 104 vorgesehen, so dass diese in regelmäßigen Abständen in bevorzugten Haltepositionen relativ zu den Einlassöffnungen 126 und Auslassöffnungen 132 angehalten werden.

Insbesondere bei einer kontinuierlich aufrechterhaltenen Gasströmung kann hierdurch die bevorzugte Durchströmung oder Durchspülung der Werkstücke 104 gewährleistet werden.

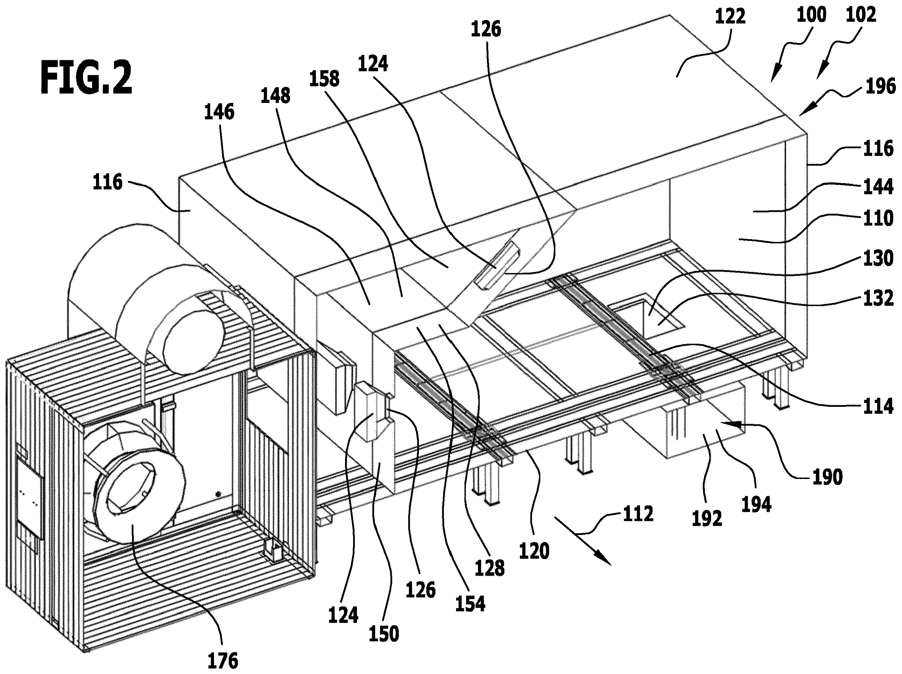

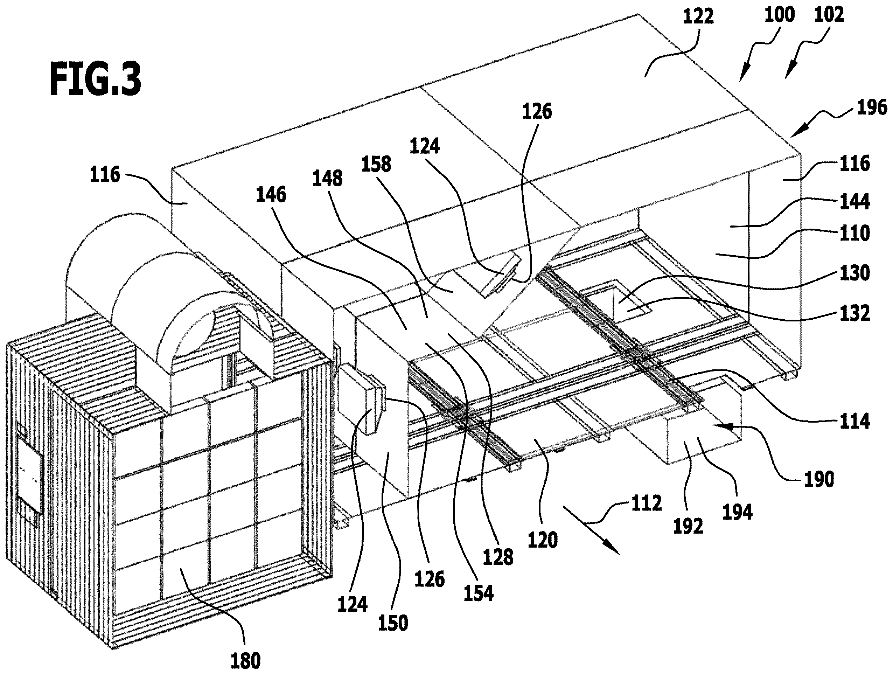

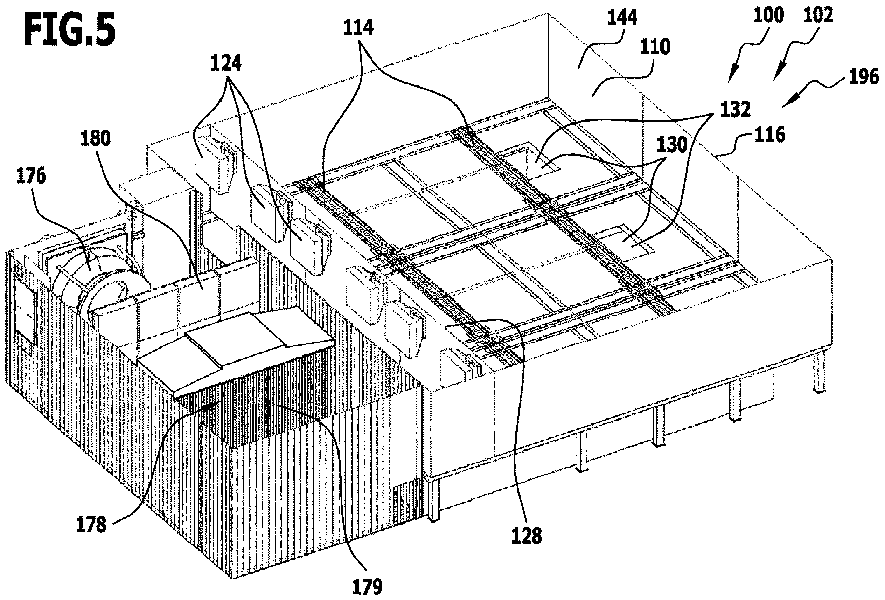

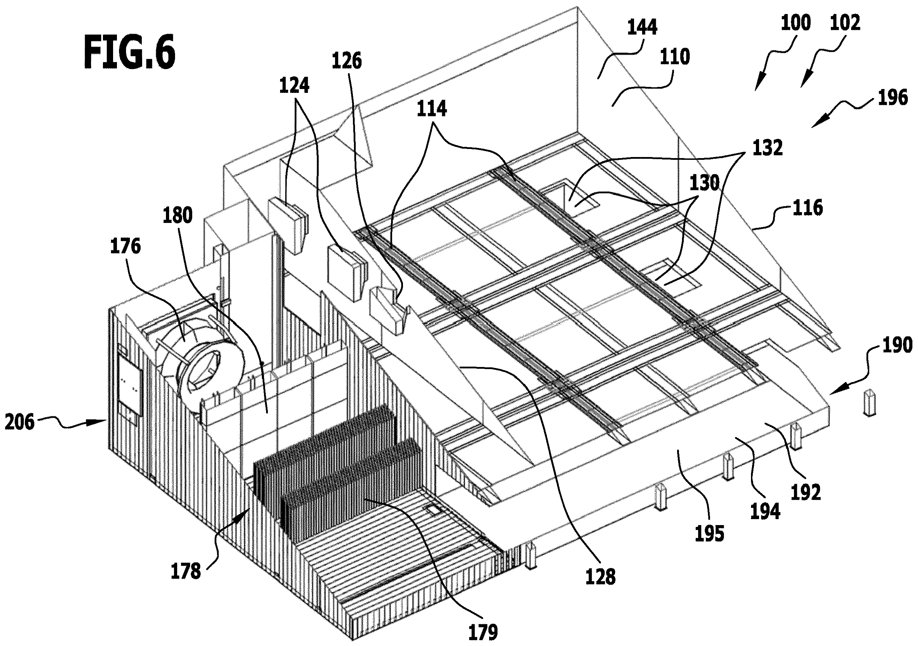

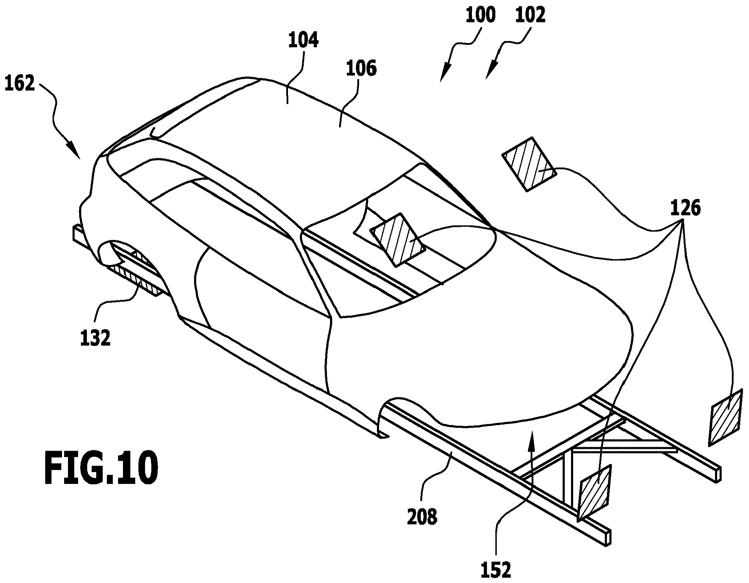

Eine in den Fig. 2 bis 10 dargestellte zweite Ausführungsform einer Behandlungsanlage 100 entspricht hinsichtlich Aufbau und Funktion im Wesentlichen der Behandlungsanlage 100 gemäß der in Fig. 1 dargestellten ersten Ausführungsform.

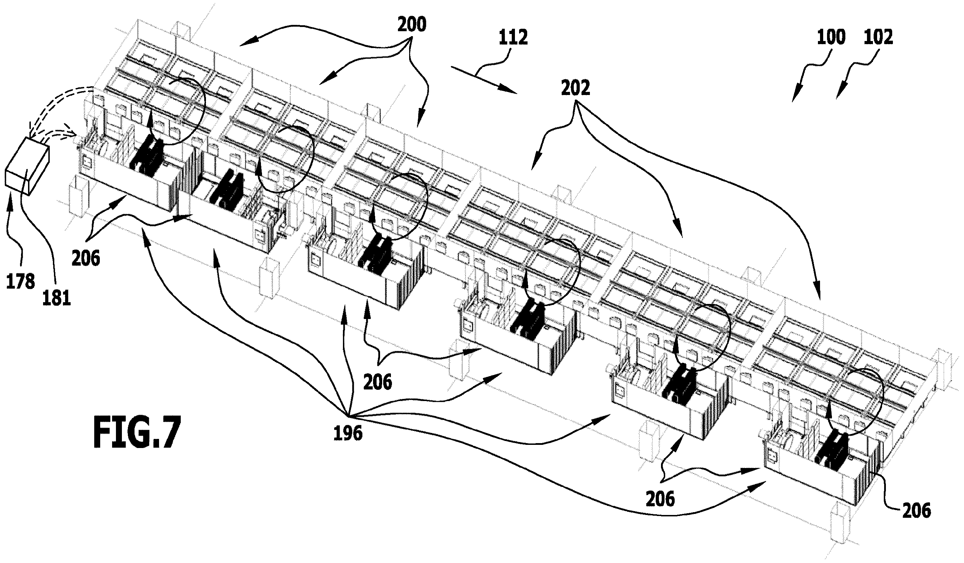

Wie insbesondere Fig. 7 zu entnehmen ist, umfasst die Behandlungsanlage 100 mehrere Module, beispielsweise Umluftmodule 196, welche längs der Förderrichtung 112 aufeinanderfolgend angeordnet sind.

Dabei sind beispielsweise drei Umluftmodule 196 vorgesehen, welche jeweils eine Aufheizzone 200 des Behandlungsraums 110 bilden. Beispielsweise drei weitere Umluftmodule 196 bilden beispielsweise drei Haltezonen 202 des Behandlungsraums 110. Ferner können nicht dargestellte Kühlzonen durch weitere Umluftmodule 196 gebildet sein.

Eine Aufheizzone 200 dient insbesondere dem Zuführen von Wärme zu dem Werkstück 104 derart, dass sich dieses erhitzt.

In der Haltezone 202 erfolgt eine Wärmezufuhr vorzugsweise derart, dass eine bereits vorhandene Temperatur des Werkstücks 104 konstant gehalten wird.

Die Aufheizzonen 200 und die Haltezonen 202 bilden zusammen vorzugsweise einen Wärmeabschnitt 204 des Behandlungsraums 110.

In diesem Wärmeabschnitt 204 erfolgt vorzugsweise ein Großteil des Umwandlungsvorgangs der Beschichtung des Werkstücks 104, um die Beschichtung in den langzeitstabilen Zustand zu überführen. Insbesondere erfolgt hier eine Vernetzung von Lack und/oder ein Abdunsten von Lösemitteln.

Wie Fig. 7 zu entnehmen ist, umfasst vorzugsweise jedes Modul, insbesondere jedes Umluftmodul 196, ein separates Umluftaggregat 206 zum Antreiben eines Umluftgasstroms in dem jeweiligen Umluftmodul 196.

Jedes Umluftaggregat 206 umfasst vorzugsweise eine Gebläsevorrichtung 176, eine Heizvorrichtung 178, eine Abscheidevorrichtung 180 und/oder ein oder mehrere Ventile 182, insbesondere ein Zuführventil 184, ein Abführventil 186 und/oder ein Umluftventil 188.

Das Umluftaggregat 206 ist insbesondere an eine Seitenwand 116 des Gehäuses 108 der Behandlungsanlage 100, insbesondere des jeweiligen Umluftmoduls 196, angedockt. Eine Seitenwand 116 des Gehäuses 108 bildet dabei vorzugsweise zugleich eine Seitenwand 116 des jeweiligen Umluftaggregats 206. Vorzugsweise sind dann einfache Durchtrittsöffnungen in der Seitenwand 116 ausreichend, um eine Fluidverbindung zwischen dem jeweiligen Umluftaggregat 206 und dem zugehörigen Abschnitt des Behandlungsraums 110 und/oder des jeweiligen Verteilerraums 146 herzustellen.

Durch die Verwendung mehrerer Module, insbesondere Umluftmodule 196, und/oder mehrerer separater Umluftaggregate 206 kann vorzugsweise ein einfacher modularer Aufbau der Behandlungsanlage 100 ermöglicht werden. Ferner ist hierdurch vorzugsweise ein effizienter Betrieb der Behandlungsanlage 100 möglich.

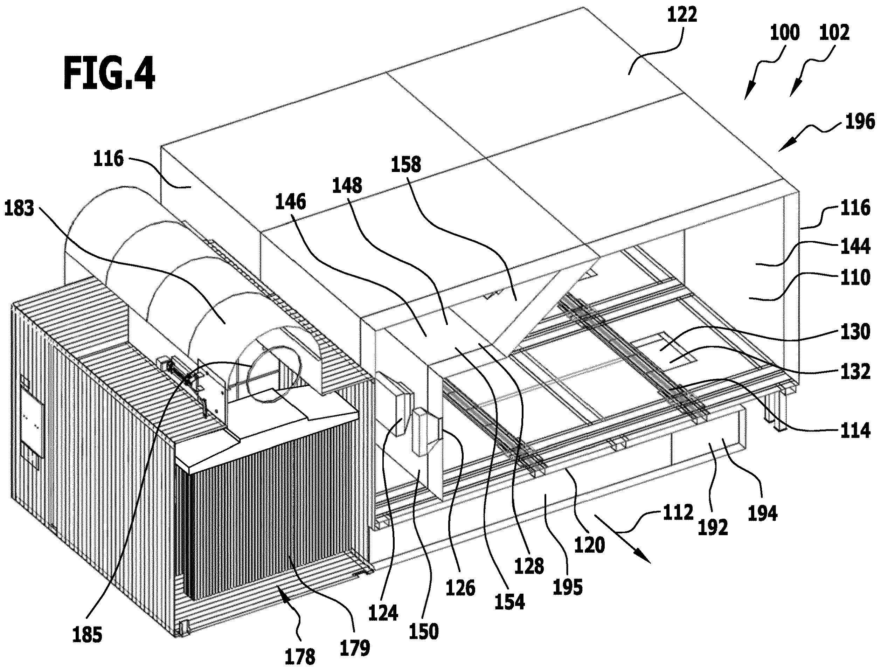

Wie insbesondere den Fig. 4 bis 7 zu entnehmen ist, kann die Heizvorrichtung 178 beispielsweise eine zentrale Heizvorrichtung 178 sein, bei welcher mehrere Wärmetauscher 179 der Wärmeübertragung in den einzelnen Umluftmodulen 196 dienen, während die eigentliche Wärmeerzeugung (Heizleistung) in einer zentralen Heizvorrichtung 178, beispielsweise einer thermischen Abgasreinigungsvorrichtung 181, erfolgt.

Die Umluftaggregate 206 sind dann beispielsweise mittels einer Heißgasleitung 183 (siehe Fig. 4) miteinander und mit der thermischen Abgasreinigungsvorrichtung 181 verbunden, so dass in der thermischen Abgasreinigungsvorrichtung 181 erzeugtes Heißgas gezielt, insbesondere gesteuert und/oder geregelt, den einzelnen Wärmetauschern 179 in den Umluftaggregaten 206 zuführbar ist.

Das in der thermischen Abgasreinigungsvorrichtung 181 erzeugte Heißgas ist insbesondere Abgas aus der thermischen Abgasreinigungsvorrichtung 181.

Dieses Abgas ist insbesondere ein gereinigtes Abgas, welches somit auch als Reingas bezeichnet wird.

Die Heißgasleitung 183 ist somit insbesondere auch eine Reingasleitung 185.

Mittels der Wärmetauscher 179 ist das dem Behandlungsraum 110 zuzuführende Gas vorzugsweise indirekt erhitzbar.

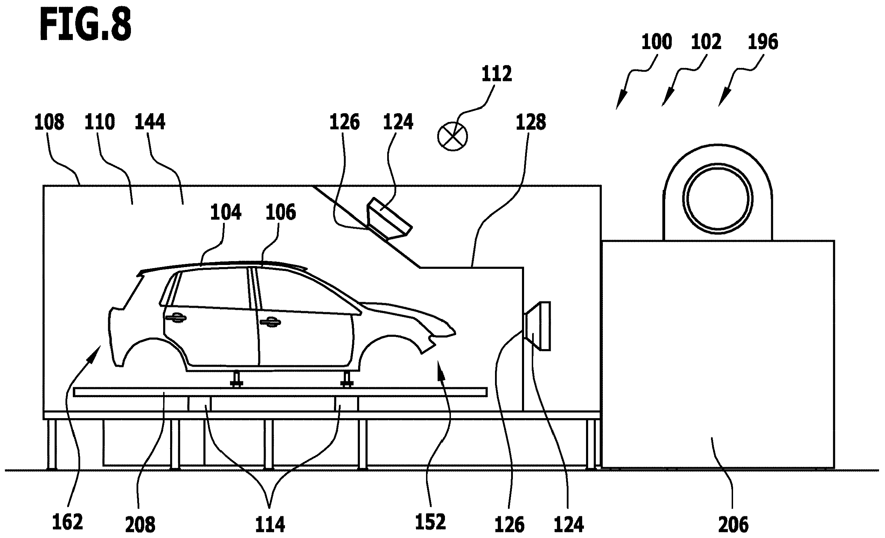

Wie insbesondere den Fig. 8 bis 10 zu entnehmen ist, kann beispielsweise vorgesehen sein, dass die Werkstücke 104 mittels jeweils eines Skids 208 aufgenommen sind.

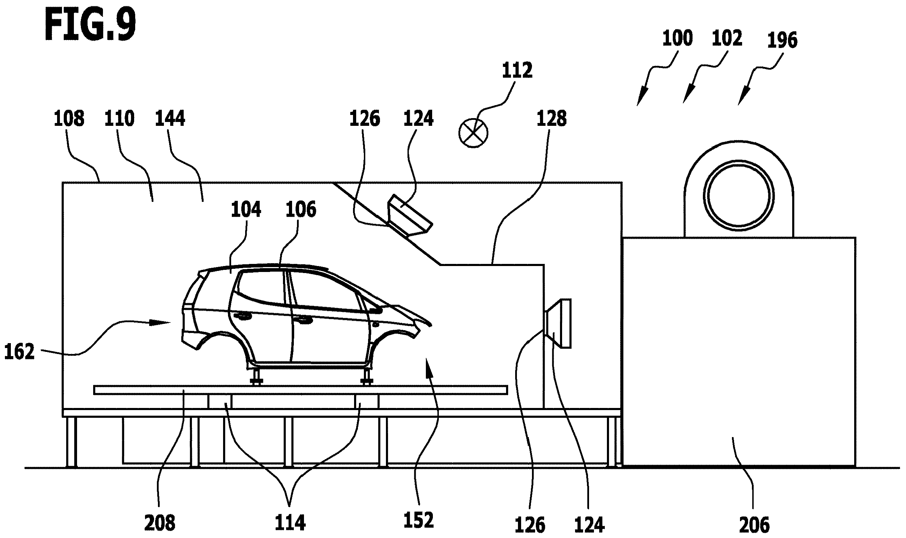

Die Behandlungsanlage 100 eignet sich dabei vorzugsweise zum wahlweisen Behandeln von Werkstücken 104 unterschiedlicher Art und/oder Größe (siehe insbesondere die Fig. 8 und 9).

Durch geeignete Positionierung und/oder Förderung der Werkstücke 104 kann vorzugsweise auch bei unterschiedlichen Werkstücken 104 eine gleichmäßige Durchströmung mit dem Gasstrom gewährleistet werden.

Insbesondere sind die Werkstücke 104 vorzugsweise stets derart positionierbar, dass die in dem schrägen Abschnitt 158 der Trennwand 128 angeordneten Einlassöffnungen 126 stets durch eine Eintrittsöffnung 170 in den Werkstückinnenraum 168 gerichtet sind.

Im Übrigen stimmt die in den Fig. 2 bis 10 dargestellte Ausführungsform einer Behandlungsanlage 100 hinsichtlich Aufbau und Funktion mit der in Fig. 1 dargestellten Ausführungsform überein, so dass auf deren vorstehende Beschreibung insoweit Bezug genommen wird.

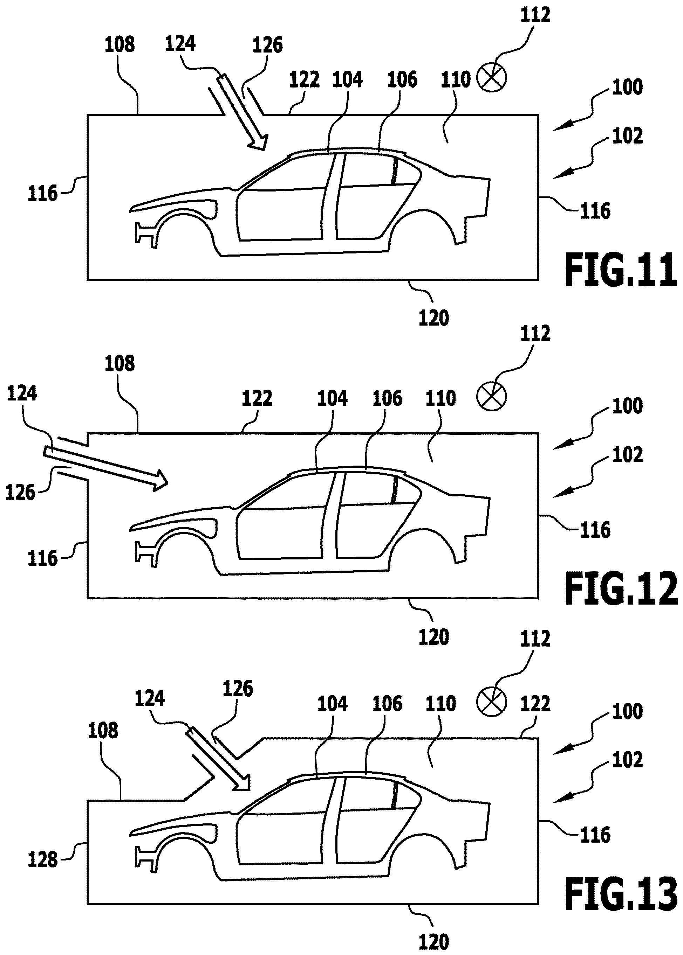

In den Fig. 11 bis 24 sind unterschiedliche Ausführungsformen von Behandlungsanlagen 100 dargestellt, welche sich im Wesentlichen nur hinsichtlich der Anordnung der Einlassöffnungen 126, der Auslassöffnungen 132, der Trennwand 128 und/oder der Fördervorrichtung 114 voneinander und von den vorstehenden Ausführungsformen unterscheiden.

Für den wesentlichen Aufbau der in den Fig. 11 bis 24 dargestellten Ausführungsformen von Behandlungsanlagen 100 wird daher auf die vorstehenden Ausführungen Bezug genommen.

In den Fig. 11 bis 19 sind Ausführungsformen von Behandlungsanlagen 100 dargestellt, bei welchen eine Querförderung vorgesehen ist. Bei einer solchen Querförderung ist insbesondere eine Förderung mittels der Fördervorrichtung 114 derart vorgesehen, dass die Werkstücklängsrichtung 140 quer, insbesondere senkrecht, zur Förderrichtung 112 ausgerichtet ist.

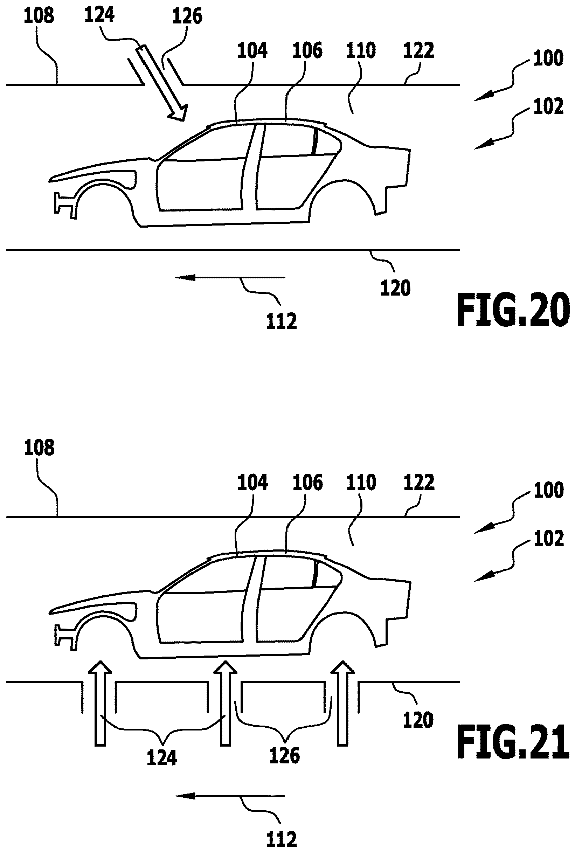

Bei den Ausführungsformen gemäß den Fig. 20 bis 24 ist hingegen eine Längsförderung vorgesehen. Bei einer solchen Längsförderung ist die Werkstücklängsrichtung 140 parallel zur Förderrichtung 112 ausgerichtet.

Die Fig. 11 bis 15, 20 und 21 zeigen unterschiedliche Varianten zur Zuführung eines Gasstroms zu dem Behandlungsraum 110.

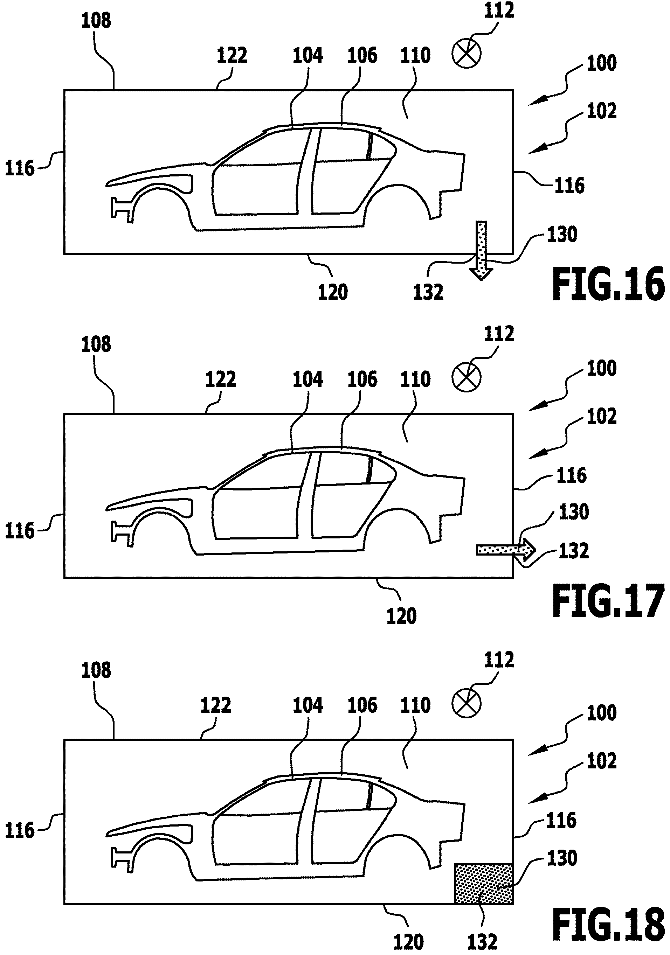

Die Fig. 16 bis 18, 22 und 23 zeigen unterschiedliche Varianten zur Abführung des Gasstroms aus dem Behandlungsraum 110.

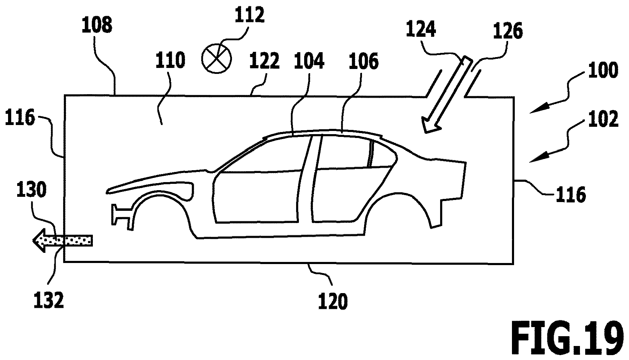

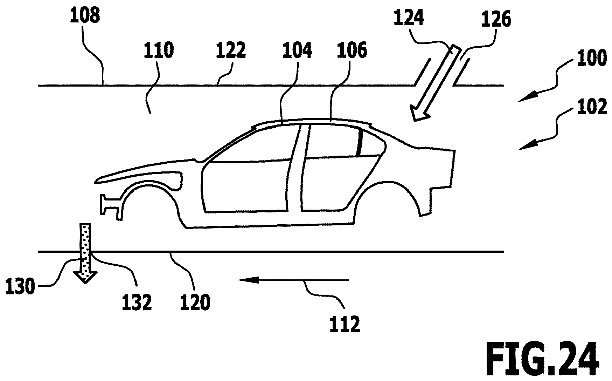

Die Fig. 19 und 24 zeigen beispielhafte vollständige Durchströmungen, insbesondere samt einer Variante einer Gaszuführung und einer Variante einer Gasabführung, wobei ein beispielsweise als Fahrzeugkarosserie 106 ausgebildetes Werkstück 104 längs der Werkstücklängsrichtung 140 von hinten nach vorne mit dem Gasstrom durchströmt wird.

Grundsätzlich sind sämtliche Varianten der Gaszuführung mit sämtlichen Varianten der Gasabführung kombinierbar.

Vorzugsweise ist jedoch eine Zuführung des Gasstroms auf einer Seite des Werkstücks 104 und eine Abführung des Gasstroms auf einer dieser Seite gegenüberliegenden weiteren Seite des Werkstücks 104 vorgesehen.

In Fig. 11 ist mindestens eine Einlassöffnung 126 in einer Deckenwand 122 des Gehäuses 108 vorgesehen. Die Einlassöffnung 126 ist dabei derart ausgebildet, dass ein hierdurch strömender Gasstrom durch die Eintrittsöffnung 170 in den Werkstückinnenraum 168 des Werkstücks 104 strömen kann.

Gemäß Fig. 12 ist eine schräge Zuführung des Gasstroms in einem bezüglich der Schwerkraftrichtung 118 oberen Bereich einer vertikalen Seitenwand 116 vorgesehen. Der Gasstrom trifft dabei insbesondere schräg von oben auf die Fronthaube 156 des Werkstücks 104 auf und wird dann der Eintrittsöffnung 170 des Werkstückinnenraums 168 zugeführt.

Gemäß Fig. 13 ist mindestens eine im schrägen Abschnitt 158 einer Trennwand 128 angeordnete Einlassöffnung 126 vorgesehen.

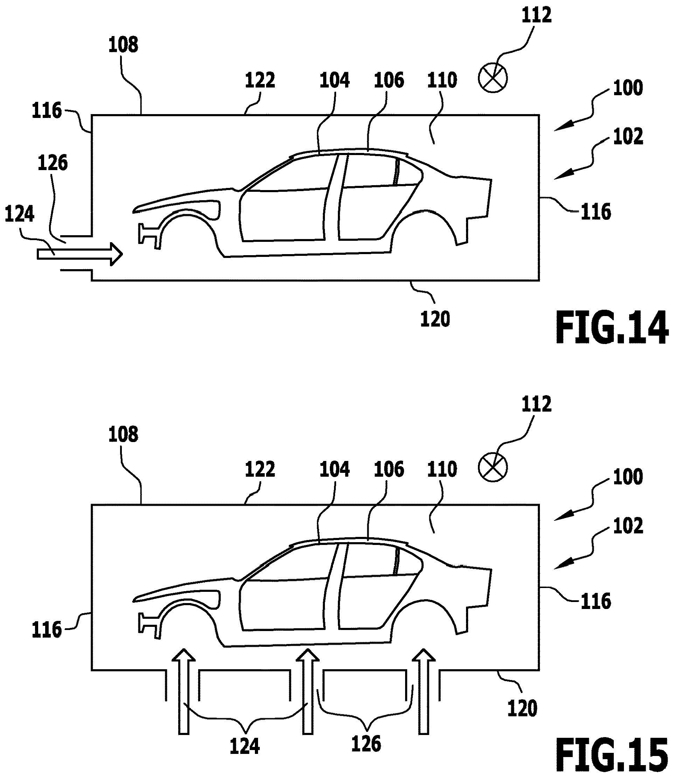

Gemäß Fig. 14 ist eine in einem bezüglich der Schwerkraftrichtung 118 unteren Bereich einer vertikalen Seitenwand 116 angeordnete Einlassöffnung 126 vorgesehen.

Gemäß Fig. 15 sind drei längs der Werkstücklängsrichtung 140 verteilt angeordnete Einlassöffnungen 126 in der Bodenwand 120 vorgesehen. Das Werkstück 104 ist dabei insbesondere entgegen der Schwerkraftrichtung 118 von unten nach oben mit dem Gasstrom durchströmbar.

Gemäß Fig. 16 ist eine Auslassöffnung 132 im Bereich des Fahrzeughecks 162 in der Bodenwand 120 des Gehäuses 108 vorgesehen.

Gemäß Fig. 17 ist mindestens eine Auslassöffnung 132 im Bereich des Fahrzeughecks 162 in der Seitenwand 116 vorgesehen.

Gemäß Fig. 18 ist eine Gasabführung in einer parallel zur Förderrichtung 112 verlaufenden Richtung, insbesondere bezüglich der Werkstücklängsrichtung 140 zu einer oder beiden Seiten des Werkstücks 104, vorgesehen. Insbesondere sind Auslassöffnungen 132 im Bereich des Fahrzeughecks 162 vorgesehen.

Gemäß Fig. 19 ist eine Einlassöffnung 126 in der Deckenwand 122 derart vorgesehen, dass ein Gasstrom in eine Eintrittsöffnung 170 zwischen zwei C-Säulen 166 des als Fahrzeugkarosserie 106 ausgebildeten Werkstücks 104 gerichtet wird.

Der durch den Werkstückinnenraum 168 hindurchgeführte Gasstrom ist schließlich in einem bezüglich der Schwerkraftrichtung 118 unteren Bereich einer vertikalen Seitenwand 116 über eine dort angeordnete Auslassöffnung 132 aus dem Behandlungsraum 110 abführbar.

Die Gaszuführung gemäß Fig. 20 entspricht derjenigen aus Fig. 11.

Die Gaszuführung gemäß Fig. 21 entspricht derjenigen aus Fig. 15.

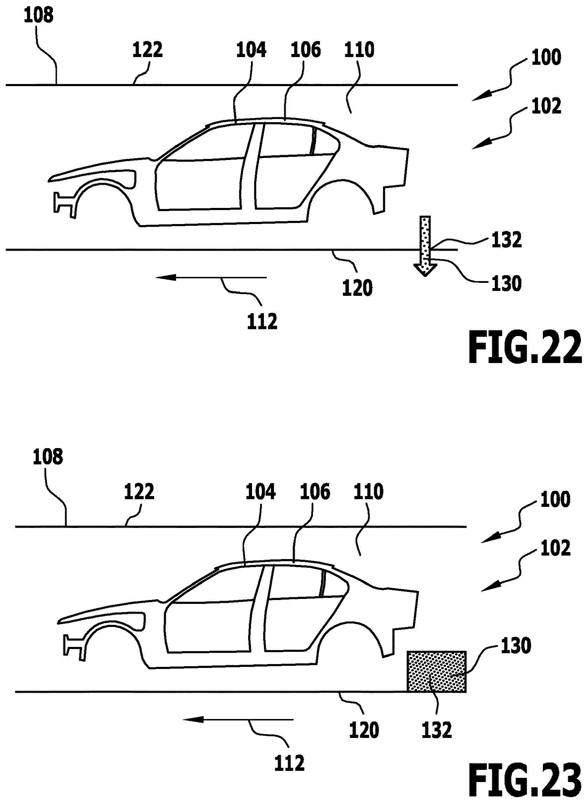

Die Gasabführung gemäß Fig. 22 entspricht derjenigen aus Fig. 16.

Die Gasabführung gemäß Fig. 23 entspricht derjenigen aus Fig. 18.

Die Durchströmung des Werkstücks 104 gemäß Fig. 19 ist ebenfalls bei der Variante gemäß Fig. 24 vorgesehen.

Wie bereits erwähnt, ist bei den Ausführungsformen der Behandlungsanlage 100 gemäß den Fig. 20 bis 24 jedoch keine Querförderung, sondern eine Längsförderung vorgesehen.

Wie insbesondere aus Fig. 24 hervorgeht, bedeutet dies, dass die Einlassöffnungen 126 einerseits und die Auslassöffnungen 132 andererseits längs der Förderrichtung 112 versetzt zueinander angeordnet sind.

Da die Richtung, in welcher der Gasstrom einströmt, an die eine oder die mehreren Eintrittsöffnungen 170 der Werkstücke 104 angepasst ist, würde sich bei kontinuierlicher Förderung der Werkstücke 104 beispielsweise ein stark überhitzter Dachbereich 174 ergeben.

Die Werkstücke 104 werden daher mittels der Förderrichtung 114 vorzugsweise getaktet gefördert und insbesondere an bevorzugten Haltepositionen, wie beispielsweise in Fig. 24 dargestellt, angehalten.

In diesen Haltepositionen erfolgt dann die gewünschte Durchströmung des Werkstückinnenraums 168.

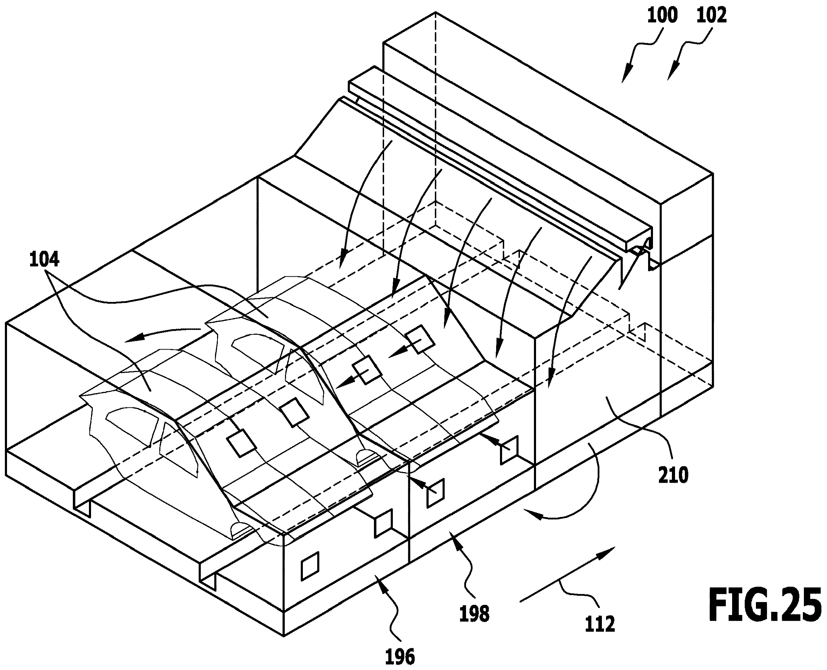

Eine in Fig. 25 dargestellte weitere Ausführungsform einer Behandlungsanlage 100 unterscheidet sich von der beispielsweise in Fig. 1 dargestellten ersten Ausführungsform im Wesentlichen dadurch, dass die Behandlungsanlage 100 eine Schleuse 210 umfasst.

Ferner umfasst die Behandlungsanlage 100 ein Umluftmodul 196 und ein Spülmodul 198.

Insbesondere ist dabei vorgesehen, dass das Umluftmodul 196, das Spülmodul 198 und die Schleuse 210 in dieser Reihenfolge längs der Förderrichtung 112 aufeinanderfolgend angeordnet sind.

Die Behandlungsanlage 100 umfasst vorzugsweise eine Gasführung derart, dass der Schleuse 210 unbelastetes Gas, beispielsweise ein Frischluftstrom, zuführbar ist.

Die Schleuse 210 ist somit insbesondere eine Luftschleuse.

Durch die Schleuse 210 hindurchgeführtes Gas, insbesondere ein Schleusengasstrom, ist mittels der Gasführung der Behandlungsanlage 100 vorzugsweise dem Spülmodul 198 zuführbar.

Insbesondere wird der Gasstrom in dem Spülmodul 198 als Spülgasstrom durch den Behandlungsraum 110, insbesondere den Werkstückinnenraum 168, hindurchgeführt, um zuvor darin enthaltene Verunreinigungen möglichst vollständig abzuführen und aus dem Werkstückinnenraum 168 und/oder dem Behandlungsraum 110 zu entfernen. Die Verunreinigungen sind insbesondere Lösemitteldämpfe.

Der aus dem Spülmodul 198 abgeführte Spülgasstrom kann vorzugsweise weiterverwendet werden. Beispielsweise kann dieser zumindest teilweise als Zuluft zu einem Umluftmodul 196 hinzugeführt werden. Ferner kann auch eine Zuführung zu einer (nicht dargestellten) Abgasreinigungsvorrichtung vorgesehen sein.

Durch die beschriebene Gasführung der Behandlungsanlage 100 kann insbesondere ein energieeffizienter Betrieb der Behandlungsanlage 100 ermöglicht werden.

Im Übrigen stimmt die in Fig. 25 dargestellte Ausführungsform einer Behandlungsanlage 100 vorzugsweise hinsichtlich Aufbau und Funktion mit der in Fig. 1 dargestellten ersten Ausführungsform überein, so dass auf deren vorstehende Beschreibung insoweit Bezug genommen wird.

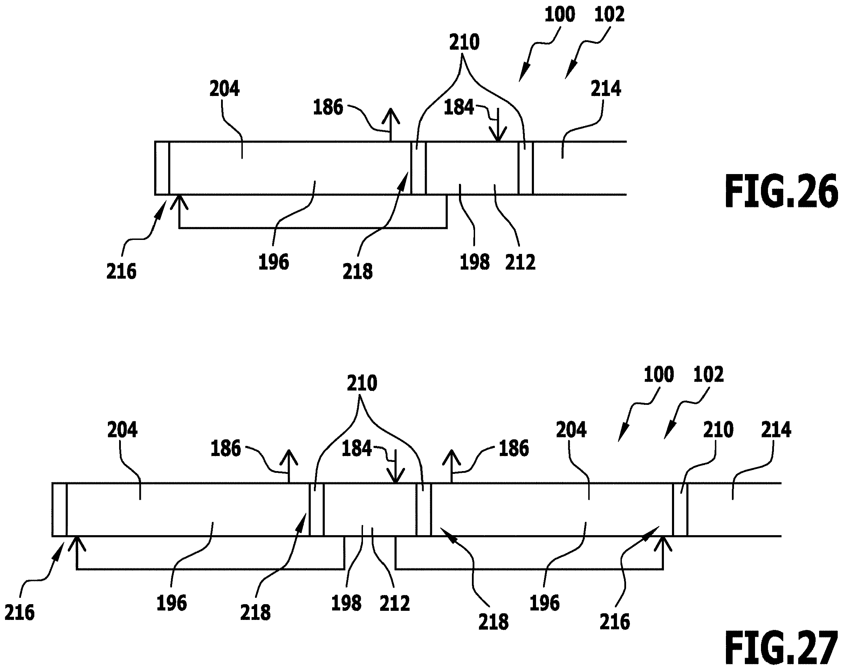

Eine in Fig. 26 schematisch dargestellte weitere Ausführungsform einer Behandlungsanlage 100 unterscheidet sich von der in Fig. 25 dargestellten Ausführungsform im Wesentlichen dadurch, dass die Behandlungsanlage 100 neben einem durch ein oder mehrere Umluftmodule 196 gebildeten Wärmeabschnitt 204 einen beispielsweise durch ein Spülmodul 198 gebildeten Spülabschnitt 212 und einen Kühlabschnitt 214 umfasst.

Ferner sind vorzugsweise zwei Schleusen 210 vorgesehen, wobei eine Schleuse 210 den Wärmeabschnitt 204 von dem Spülabschnitt 212 trennt. Die weitere Schleuse 210 trennt den Spülabschnitt 212 von dem Kühlabschnitt 214.

Der Wärmeabschnitt 204, eine Schleuse 210, der Spülabschnitt 212, die weitere Schleuse 210 und der Kühlabschnitt 214 sind vorzugsweise in dieser Reihenfolge bezüglich der Förderrichtung 112 aufeinanderfolgend angeordnet.

Die in Fig. 26 dargestellte Behandlungsanlage 100 umfasst vorzugsweise eine Gaszuführung, bei welcher ein Frischluftgasstrom einer Schleuse 210 oder dem Spülabschnitt 212 zuführbar ist.

Ein durch den Spülabschnitt 212 hindurchgeführter Spülgasstrom wird vorzugsweise dem Wärmeabschnitt 204 zugeführt. Insbesondere ist dabei eine Zuführung an einem dem Spülabschnitt 212 abgewandten Ende 216 des Wärmeabschnitts 204 vorgesehen.

Eine Abführung des durch den Wärmeabschnitt 204 hindurchgeführten Gasstroms erfolgt vorzugsweise an einem dem Spülabschnitt 212 zugewandten Ende 218 des Wärmeabschnitts 204.

Im Übrigen stimmt die in Fig. 26 dargestellte Ausführungsform einer Behandlungsanlage 100 hinsichtlich Aufbau und Funktion mit der in Fig. 25 und/oder einer der in den Fig. 1 bis 24 dargestellten Ausführungsformen überein, so dass auf deren vorstehende Beschreibung insoweit Bezug genommen wird.

Eine in Fig. 27 dargestellte Ausführungsform einer Behandlungsanlage 100 unterscheidet sich von der in Fig. 26 dargestellten Ausführungsform im Wesentlichen dadurch, dass die Behandlungsanlage 100 zwei Wärmeabschnitte 204 umfasst, zwischen welchen ein mittels zweier Schleusen 210 abgetrennter Spülabschnitt 212 angeordnet ist.

Eine weitere Schleuse 210 ist vorzugsweise zwischen dem bezüglich der Förderrichtung 112 hinteren Wärmeabschnitt 204 und dem Kühlabschnitt 214 angeordnet.

Bei der in Fig. 27 dargestellten Ausführungsform der Behandlungsanlage 100 ist vorzugsweise vorgesehen, dass der durch den Spülabschnitt 212 hindurchgeführte Spülgasstrom geteilt wird und jeweils ein Teilgasstrom an einem dem Spülabschnitt 212 abgewandten Ende 216 eines jeden Wärmeabschnitts 204 zugeführt wird.

Die Abführung des durch den jeweiligen Wärmeabschnitt 204 hindurchgeführten Gasstroms erfolgt dann an dem Ende 218 eines jeden Wärmeabschnitts 204, welches dem Spülabschnitt 212 zugewandt angeordnet ist.

Durch die gewählte Gasführung ergibt sich bei der in Fig. 27 dargestellten Ausführungsform der Behandlungsanlage 100 eine Durchströmung des bezüglich der Förderrichtung 112 vorderen Wärmeabschnitts 204 vorzugsweise in der Förderrichtung 112, während der bezüglich der Förderrichtung 112 hintere Wärmeabschnitt 204 vorzugsweise entgegen der Förderrichtung 112 durchströmt wird. Hierdurch ergibt sich insbesondere eine Anreicherung von Lösemittel im bezüglich der Förderrichtung 112 vorderen Teil der Behandlungsanlage 100, insbesondere vor dem Spülabschnitt 212. Durch die Führung des Gasstroms im Gegenstrom im bezüglich der Förderrichtung 112 hinteren Wärmeabschnitt 204 ergibt sich vorzugsweise ein besonders geringer Austrag von Lösemittel an die Umgebung.

Im Übrigen stimmt die in Fig. 27 dargestellte Ausführungsform einer Behandlungsanlage 100 hinsichtlich Aufbau und Funktion mit der in Fig. 26 dargestellten Ausführungsform überein, so dass auf deren vorstehende Beschreibung insoweit Bezug genommen wird.

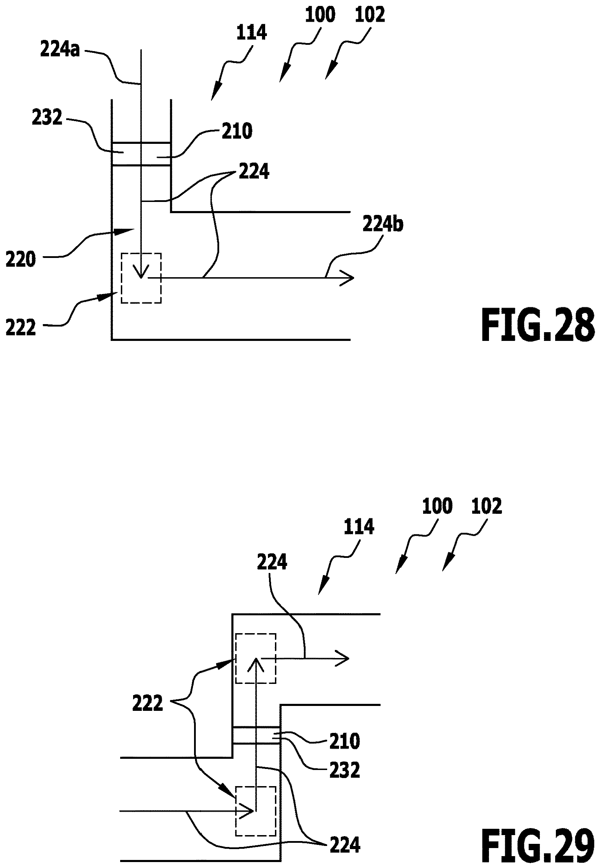

In den Fig. 28 bis 32 sind unterschiedliche Varianten von Fördervorrichtungen 114 dargestellt.

Diese verschiedenen Varianten der Fördervorrichtung 114 können vorzugsweise bei sämtlichen dargestellten und beschriebenen Varianten von Behandlungsanlagen 100 verwendet werden.

Insbesondere sind die Fördervorrichtungen 114 dabei zur Förderung der Werkstücke 104 längs einer Gesamtförderstrecke 220 vorgesehen.

Diese Gesamtförderstrecke 220 erstreckt sich vorzugsweise durch sämtliche Abschnitte der Behandlungsanlage 100, insbesondere durch den Wärmeabschnitt 204, einen Spülabschnitt 212 und/oder ein Kühlabschnitt 214 oder durch mehrere der genannten Abschnitte 204, 212, 214.

Zudem ist mittels der jeweiligen Fördervorrichtung 114 auch ein Hindurchfördern durch eine oder mehrere Schleusen 210 vorgesehen.

Bei der in Fig. 28 dargestellten Ausführungsform einer Fördervorrichtung 114 ist vorgesehen, dass die Fördervorrichtung 114 eine Umsetzvorrichtung 222 umfasst.

Mittels einer solchen Umsetzvorrichtung 222 ist insbesondere eine Verbindung zwischen zwei beispielsweise in einem Winkel von 90° aufeinandertreffenden Teilförderstrecken 224 der Gesamtförderstrecke 220 herstellbar.

Mittels der Umsetzvorrichtung 222 ist insbesondere eine Weitergabe der Werkstücke 104 von einer Teilförderstrecke 224 zu der weiteren Teilförderstrecke 224 derart möglich, dass die Werkstücke 104 eine globale Drehausrichtung relativ zur Behandlungsanlage 100 unverändert beibehalten.

Wenn beispielsweise in einer ersten Teilförderstrecke 224a eine Längsförderung der Werkstücke 104 vorgesehen ist und diese Teilförderstrecke 224a auf eine senkrecht hierzu verlaufende zweite Teilförderstrecke 224b trifft, ergibt sich bei unveränderter Drehausrichtung der Werkstücke 104 im Bereich der zweiten Teilförderstrecke 224b eine Querförderung.

Eine Fördervorrichtung 114 gemäß der in Fig. 28 dargestellten Ausführungsform eignet sich insbesondere dann, wenn eine Schleuse 210 mit möglichst geringem Querschnitt durchfahren werden muss, im Anschluss jedoch eine Querförderung bevorzugt ist.

Eine in Fig. 29 dargestellte Ausführungsform einer Fördervorrichtung 114 unterscheidet sich von der in Fig. 28 dargestellten Ausführungsform im Wesentlichen dadurch, dass drei Teilförderstrecken 224 und zwei Umsetzvorrichtungen 222 vorgesehen sind. Mittels der Fördervorrichtung 114 ist dabei insbesondere zunächst eine Querförderung der Werkstücke 104 in eine Längsförderung derselben umsetzbar, beispielsweise um diese durch eine Schleuse 210 hindurchzuführen. Im Anschluss daran sind die Werkstücke 104 insbesondere erneut umsetzbar, um eine weitere Querförderung zu ermöglichen.

Im Übrigen stimmt die in Fig. 29 dargestellte Ausführungsform hinsichtlich Aufbau und Funktion mit der in Fig. 28 dargestellten Ausführungsform überein, so dass auf deren vorstehende Beschreibung insoweit Bezug genommen wird.

Mittels einer Fördervorrichtung 114 gemäß der in Fig. 29 dargestellten Ausführungsform kann insbesondere ein seitlicher Versatz der Werkstücke 104 (in einer senkrecht zur Förderrichtung verlaufenden Richtung) realisiert werden.

Es kann ferner vorgesehen sein, dass eine Fördervorrichtung 114 im Wesentlichen zwei Fördervorrichtungen 114 gemäß der in Fig. 29 dargestellten Ausführungsform umfasst, welche derart angeordnet und ausgebildet sind, dass die Werkstücke 104 zunächst seitlich versetzbar und anschließend zurück auf eine ursprüngliche Fördergerade bringbar sind.

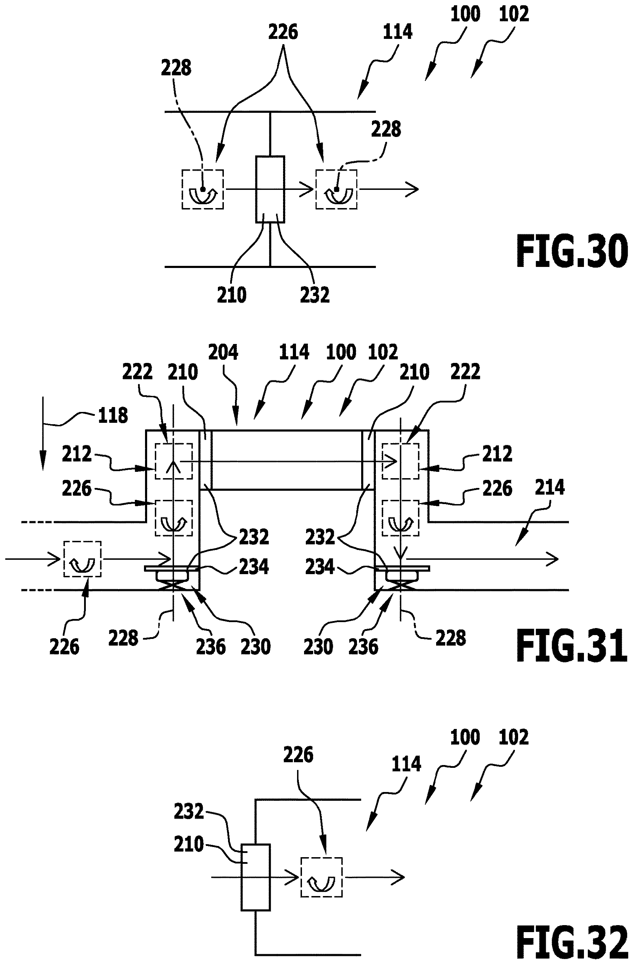

Eine in Fig. 30 dargestellte weitere Ausführungsform einer Fördervorrichtung 114 unterscheidet sich von der in Fig. 28 dargestellten Ausführungsform im Wesentlichen dadurch, dass die Fördervorrichtung 114 zwei Rotationsvorrichtungen 226 umfasst.

Mittels einer jeden Rotationsvorrichtung 226 sind die Werkstücke 104 vorzugsweise um eine vertikale Rotationsachse 228 drehbar.

Mittels der Rotationsvorrichtung 226 ist somit eine globale Drehausrichtung der Werkstücke 104 relativ zur Behandlungsanlage 100 veränderbar, insbesondere ohne eine generelle Förderrichtung 112 in zwei mittels der jeweiligen Rotationsvorrichtung 226 miteinander verbundenen Teilförderstrecken 224 zu verändern.

Bei der in Fig. 30 dargestellten Ausführungsform der Behandlungsanlage 100 ist insbesondere vorgesehen, dass die Werkstücke 104 zunächst senkrecht zur Förderrichtung 112 ausgerichtet gefördert werden, das heißt es ist eine Querförderung vorgesehen. Mittels einer Rotationsvorrichtung 226 wird dann vorzugsweise vor einer Schleuse 210 eine Drehung der Werkstücke 104 durchgeführt, um die Querförderung in eine Längsförderung zu überführen. Die Werkstücke 104 werden dann in dieser Längsausrichtung durch die Schleuse 210 hindurchgeführt und anschließend mittels einer weiteren Rotationsvorrichtung 226 erneut gedreht, um letztlich die Querförderung fortzuführen.

Die Förderrichtung 112 ändert sich dabei vorzugsweise nicht.

Im Übrigen stimmt die in Fig. 30 dargestellte Ausführungsform einer Fördervorrichtung 114 vorzugsweise hinsichtlich Aufbau und Funktion mit der in Fig. 28 dargestellten Ausführungsform überein, so dass auf deren vorstehende Beschreibung insoweit Bezug genommen wird.

Eine in Fig. 31 dargestellte Ausführungsform einer Fördervorrichtung 114 unterscheidet sich von der in Fig. 28 dargestellten Ausführungsform im Wesentlichen dadurch, dass die Fördervorrichtung 114 sowohl eine Rotationsvorrichtung 226, als auch eine Umsetzvorrichtung 222 und eine Hebevorrichtung 230 umfasst.

Diese Fördervorrichtung 114 ist insbesondere in einer Behandlungsanlage 100 verwendbar, welche als so genannter A-Trockner ausgebildet ist.

Günstig kann es sein, wenn die Behandlungsanlage 100 einen Wärmeabschnitt 204 und/oder einen Spülabschnitt 212 umfasst, welcher bezüglich der Schwerkraftrichtung 118, insbesondere vollständig, oberhalb eines Kühlabschnitts 214 angeordnet ist. Hierdurch kann ein unerwünschter Wärmeaustrag aus dem Wärmeabschnitt 204 vermieden werden oder zumindest reduziert werden.

Die Werkstücke 104 sind vorzugsweise längs einer ersten Teilförderstrecke 224 durch den Wärmeabschnitt 204 hindurchförderbar und dem Spülabschnitt 212 zuführbar.

Der Spülabschnitt 212 ist vorzugsweise mittels zweier mechanischer Trennelemente 232 von dem Wärmeabschnitt 204 und/oder dem Kühlabschnitt 214 abtrennbar.

Ein Trennelement 232 kann beispielsweise als ein Rolltor oder Hubtor ausgebildet sein, welches zwischen den Wärmeabschnitt 204 und den Spülabschnitt 212 einbringbar ist.

Ein weiteres Trennelement 232 ist beispielsweise eine Bodenplatte 234 der Hebevorrichtung 230.

Die Bodenplatte 234 schließt dabei insbesondere einen Innenraum des Spülabschnitts 212 in der Schwerkraftrichtung 118 nach unten ab, wenn die Hebevorrichtung 230 in einer angehobenen Position vorliegt, beispielsweise um Werkstücke 104 auf dem Niveau des Wärmeabschnitts 204 aufnehmen zu können.

Zur Übergabe von Werkstücken 104 im Bereich des Spülabschnitts 212 kann fakultativ eine Umsetzvorrichtung 222 vorgesehen sein.

Mittels der Hebevorrichtung 230 sind die Werkstücke 104 von dem Niveau des Wärmeabschnitts 204 auf das Niveau des Kühlabschnitts 214 absenkbar und dann, insbesondere mittels einer fakultativen Umsetzvorrichtung 222, an eine weitere Teilförderstrecke 224 übergebbar.

Es kann vorgesehen sein, dass mittels einer oder mehrerer Rotationsvorrichtungen 226 eine globale Drehausrichtung der Werkstücke 104 relativ zur Behandlungsanlage 100 verändert wird.

Beispielsweise kann eine Rotationsvorrichtung 226 gemeinsam mit der Hebevorrichtung 230 eine integrierte Handhabungsvorrichtung 236 bilden.

Hierbei kann insbesondere vorgesehen sein, dass die Werkstücke 104 während des Anhebens oder Absenkens mittels der Hebevorrichtung 230 zugleich um eine vertikale Rotationsachse 228 gedreht werden.

Eine weitere Rotationsvorrichtung 226, welche beispielsweise im Kühlabschnitt 214 angeordnet ist, kann ferner der optimierten Förderung der Werkstücke 104 in diesem Kühlabschnitt 214 dienen.

Im Übrigen stimmt die in Fig. 31 dargestellte Ausführungsform einer Fördervorrichtung 114 und/oder der gesamten Behandlungsanlage 100 hinsichtlich Aufbau und Funktion wahlweise mit einer oder mehreren der vorstehend beschriebenen Ausführungsformen überein, so dass auf deren vorstehende Beschreibung insoweit Bezug genommen wird.

Eine in Fig. 32 dargestellte Ausführungsform einer Fördervorrichtung 114 unterscheidet sich von der in Fig. 30 dargestellten Ausführungsform im Wesentlichen dadurch, dass lediglich eine Rotationsvorrichtung 226 vorgesehen ist.

Bezüglich der Förderrichtung 112 vor der Schleuse 210 ist somit vorzugsweise eine Längsförderung der Werkstücke 104 vorgesehen, um die Werkstücke 104 mit möglichst geringem Querschnitt durch die Schleuse 210 hindurchführen zu können. Nach der Schleuse 210 ist dann vorzugsweise mittels der Rotationsvorrichtung 226 die Längsförderung in eine Querförderung umsetzbar.

Im Übrigen stimmt die in Fig. 32 dargestellte Ausführungsform einer Fördervorrichtung 114 hinsichtlich Aufbau und Funktion mit der in Fig. 30 dargestellten Ausführungsform überein, so dass auf deren vorstehende Beschreibung insoweit Bezug genommen wird.

## Patentansprüche

1. Behandlungsanlage (100) zum Behandeln von als Fahrzeugkarosserien (106) ausgebildeten Werkstücken (104), wobei die Behandlungsanlage (100) einen Behandlungsraum (110) und eine Fördervorrichtung (114) umfasst, mittels welcher die Werkstücke (104) dem Behandlungsraum (110) zuführbar, von dem Behandlungsraum (110) abführbar und/oder in einer Förderrichtung (112) durch den Behandlungsraum (110) hindurchförderbar sind, **dadurch gekennzeichnet, dass** die Behandlungsanlage (100) mehrere Einlassöffnungen (126) zum Zuführen von Gas zu dem Behandlungsraum (110) und mehrere Auslassöffnungen (132) zum Abführen von Gas aus dem Behandlungsraum (110) umfasst, welche auf einander gegenüberliegenden Seiten des Werkstücks (104) angeordnet sind, wobei eine Durchströmung des Behandlungsraums (110) derart vorgesehen ist, dass mindestens 70 % des durch die Einlassöffnungen (126) einströmenden Gases durch die Auslassöffnungen (132) aus dem Behandlungsraum (110) abführbar sind, wobei die Werkstücke (104) mittels der Fördervorrichtung (114) derart aufnehmbar und zumindest abschnittsweise derart durch den Behandlungsraum (110) förderbar sind, dass eine Längsrichtung (140) der Werkstücke (104) quer zur Förderrichtung (112) ausgerichtet ist, wobei die Einlassöffnungen (126) und die Auslassöffnungen (132) so angeordnet sind, dass der Behandlungsraum (110) im Wesentlichen senkrecht zur Förderrichtung (112) mit Gas durchströmbar ist.

2. Behandlungsanlage (100) nach Anspruch 1, **dadurch gekennzeichnet, dass** die Behandlungsanlage (100) mindestens eine Einlassöffnung (126) zum Zuführen von Gas zu dem Behandlungsraum (110) und mindestens eine Auslassöffnung (132) zum Abführen von Gas aus dem Behandlungsraum (110) umfasst, welche auf einander gegenüberliegenden Seiten des Werkstücks (104) angeordnet sind, wobei die mindestens eine Einlassöffnung (126) einerseits und die mindestens eine Auslassöffnung (132) andererseits auf voneinander verschiedenen Seiten einer vertikalen Werkstückquermittelebene (134) angeordnet sind.

3. Behandlungsanlage (100) nach einem der Ansprüche 1 oder 2, **dadurch gekennzeichnet, dass** mindestens eine Einlassöffnung (126) und mindestens eine Auslassöffnung (132) in einem Abstand voneinander entfernt angeordnet sind, welcher mindestens ungefähr 60 %, insbesondere mindestens ungefähr 80 %, einer längs einer Werkstücklängsrichtung (140) genommenen Gesamtlänge des Werkstücks (104) beträgt.

4. Behandlungsanlage (100) nach einem der Ansprüche 1 bis 3, **dadurch gekennzeichnet,**
a) **dass** die Behandlungsanlage (100) mindestens eine Einlassöffnung (126) zum Zuführen von Gas zu dem Behandlungsraum (110) und mindestens eine Auslassöffnung (132) zum Abführen von Gas aus dem Behandlungsraum (110) umfasst, wobei die mindestens eine Einlassöffnung (126) einerseits und die mindestens eine Auslassöffnung (132) andererseits bezüglich einer vertikalen Längsmittelebene (136) des Behandlungsraums (110) auf unterschiedlichen Seiten des Behandlungsraums (110) angeordnet sind; und/oder
b) **dass** die Behandlungsanlage (100) ein oder mehrere Einlassöffnungen (126) zum Zuführen von Gas zu dem Behandlungsraum (110) und/oder ein oder mehrere Auslassöffnungen (132) zum Abführen von Gas aus dem Behandlungsraum (110) umfasst, wobei die eine oder die mehreren, insbesondere sämtliche, Einlassöffnungen (126) in einem von zwei durch eine vertikale, horizontale oder schräg hierzu verlaufende Längsmittelebene (136) geteilten Halbräumen (142) des Behandlungsraums (110) angeordnet sind und/oder wobei die eine oder die mehreren, insbesondere sämtliche, Auslassöffnungen (132) in einem, insbesondere weiteren, der zwei durch die vertikale, horizontale oder schräg hierzu verlaufende Längsmittelebene (136) geteilten Halbräume (142) des Behandlungsraums (110) angeordnet sind.

5. Behandlungsanlage (100) nach einem der Ansprüche 1 bis 4, **dadurch gekennzeichnet, dass** die Behandlungsanlage (100) mehrere Einlassöffnungen (126) zum Zuführen von Gas zu dem Behandlungsraum (110) und mehrere Auslassöffnungen (132) zum Abführen von Gas aus dem Behandlungsraum (110) umfasst, wobei die Einlassöffnungen (126) einerseits und die Auslassöffnungen (132) andererseits bezüglich einer Diagonalebene (138) zumindest näherungsweise einander gegenüberliegend angeordnet sind, wobei die Diagonalebene (138) sich parallel zur Förderrichtung (112) und im Wesentlichen diagonal durch den Behandlungsraum (110) erstreckt.

6. Behandlungsanlage (100) nach einem der Ansprüche 1 bis 5, **dadurch gekennzeichnet, dass** die Behandlungsanlage (100) mehrere Einlassöffnungen (126) zum Zuführen von Gas zu dem Behandlungsraum (110) und mehrere Auslassöffnungen (132) zum Abführen von Gas aus dem Behandlungsraum (110) umfasst, wobei die Einlassöffnungen (126) und die Auslassöffnungen (132) so angeordnet sind, dass der Behandlungsraum (110) zumindest näherungsweise diagonal mit Gas durchströmbar ist.

7. Behandlungsanlage (100) nach einem der Ansprüche 1 bis 6, **dadurch gekennzeichnet, dass** die Behandlungsanlage (100) mindestens ein Umluftmodul (196) umfasst, wobei jedes Umluftmodul (196) vorzugsweise Folgendes umfasst:
- eine Gaszuführung (124) zum Zuführen von Gas zu dem Behandlungsraum (110); und/oder
- eine Gasabführung (130) zum Abführen von Gas aus dem Behandlungsraum (110); und/oder
- eine Gebläsevorrichtung (176) zum Antreiben eines Umluftgasstroms; und/oder
- eine Abscheidevorrichtung (180) zum Abscheiden von Verunreinigungen aus dem Umluftgasstrom; und/oder
- eine Verteilervorrichtung (148) zum Verteilen des dem Behandlungsraum (110) zuzuführenden Umluftgasstroms auf mehrere Einlassöffnungen (126) der Gaszuführung (124); und/oder
- eine Sammelvorrichtung (190), mittels welcher der durch mehrere Auslassöffnungen (132) der Gasabführung (130) aus dem Behandlungsraum (110) abgeführte Umluftgasstrom zusammenführbar ist.

8. Behandlungsanlage (100) nach einem der Ansprüche 1 bis 7, **dadurch gekennzeichnet, dass** die Behandlungsanlage (100) mindestens ein Spülmodul (198) umfasst, wobei jedes Spülmodul (198) vorzugsweise Folgendes umfasst:
- eine Gaszuführung (124) zum Zuführen von Gas zu dem Behandlungsraum (110); und/oder
- eine Gasabführung (130) zum Abführen von Gas aus dem Behandlungsraum (110); und/oder
- eine Gebläsevorrichtung (176) zum Antreiben eines Spülgasstroms; und/oder
- eine Abscheidevorrichtung (180) zum Abscheiden von Verunreinigungen aus dem Spülgasstrom; und/oder
- eine Verteilervorrichtung (148) zum Verteilen des dem Behandlungsraum (110) zuzuführenden Spülgasstroms auf mehrere Einlassöffnungen (126) der Gaszuführung (124); und/oder
- eine Sammelvorrichtung (190), mittels welcher der durch mehrere Auslassöffnungen (132) der Gasabführung (130) aus dem Behandlungsraum (110) abgeführte Spülgasstrom zusammenführbar ist.

9. Behandlungsanlage (100) nach einem der Ansprüche 7 oder 8, **dadurch gekennzeichnet, dass** die Verteilervorrichtung (148) mittels einer Trennwand (128) von dem Behandlungsraum (110) getrennt ist, wobei mindestens eine Einlassöffnung (126), insbesondere sämtliche Einlassöffnungen (126), vorzugsweise in der Trennwand (128) ausgebildet sind,
wobei optional vorgesehen sein kann,
a) dass die Trennwand (128) zumindest abschnittsweise einer Werkstückkontur folgend ausgebildet ist; und/oder
b) dass die Behandlungsanlage (100) eine Behandlungsanlage (100) zur Behandlung von Fahrzeugkarosserien (106) ist und dass die Trennwand (128) einen zumindest näherungsweise parallel zu einer Fahrzeugfront (152) oder einem Fahrzeugheck (162) einer Fahrzeugkarosserie (106) verlaufenden im Wesentlichen vertikalen Abschnitt (150), einen zumindest näherungsweise parallel zu einer Fronthaube (156) oder Heckhaube (164) der Fahrzeugkarosserie (106) verlaufenden im Wesentlichen horizontalen Abschnitt (154) und/oder einen zumindest näherungsweise parallel zu A-Säulen (160) oder C-Säulen (166) der Fahrzeugkarosserie (106) verlaufenden schrägen Abschnitt (158) umfasst, wobei vorzugsweise vorgesehen ist, dass die Trennwand (128) mehrere Einlassöffnungen (126) in dem zumindest näherungsweise parallel zu einer Fahrzeugfront (152) oder einem Fahrzeugheck (162) einer Fahrzeugkarosserie (106) verlaufenden im Wesentlichen vertikalen Abschnitt (150) und/oder mehrere Einlassöffnungen (126) in dem zumindest näherungsweise parallel zu A-Säulen (160) oder C-Säulen (166) der Fahrzeugkarosserie (106) verlaufenden schrägen Abschnitt (158) umfasst.

10. Behandlungsanlage (100) nach einem der Ansprüche 7 bis 9, **dadurch gekennzeichnet, dass** die Behandlungsanlage (100) mehrere Spülmodule (198) und/oder mehrere Umluftmodule (196) umfasst, wobei jedes Umluftmodul (196) eine Aufheizzone (200) oder Haltezone (202) des Behandlungsraums (110) bildet.

11. Behandlungsanlage (100) nach einem der Ansprüche 7 bis 10, **dadurch gekennzeichnet,**
**dass** die Sammelvorrichtung (190) einen vorzugsweise außerhalb des Behandlungsraums (110) angeordneten Sammelkanal (192) umfasst, in welchen mehrere Auslassöffnungen (132) münden,
und/oder
**dass** die Sammelvorrichtung (190) einen Rückführkanal (195) umfasst, mittels welchem der durch mehrere Auslassöffnungen (132) aus dem Behandlungsraum (110) abgeführte Umluftgasstrom oder Spülgasstrom zur Gebläsevorrichtung (176), zur Abscheidevorrichtung (180) und/oder zur Verteilervorrichtung (148) führbar ist.

12. Behandlungsanlage (100) nach einem der Ansprüche 1 bis 11, **dadurch gekennzeichnet,**
a) **dass** die Behandlungsanlage (100) mindestens eine Einlassöffnung (126) zum Zuführen von Gas zu dem Behandlungsraum (110) und mindestens eine Auslassöffnung (132) zum Abführen von Gas aus dem Behandlungsraum (110) umfasst, welche auf einander gegenüberliegenden Seiten des Werkstücks (104) angeordnet sind, wobei eine Durchströmung des Behandlungsraums (110) derart vorgesehen ist, dass mindestens 90 % des durch diese mindestens eine Einlassöffnung (126) einströmenden Gases durch diese mindestens eine Auslassöffnung (132) aus dem Behandlungsraum (110) abführbar sind; und/oder
b) **dass** die Behandlungsanlage (100) mindestens eine Auslassöffnung (132) zum Abführen von Gas aus dem Behandlungsraum (110) umfasst, welche in einer den Behandlungsraum (110) begrenzenden Bodenwand (120) oder Seitenwand (116) angeordnet ist.

13. Behandlungsanlage (100) nach einem der Ansprüche 1 bis 12, **dadurch gekennzeichnet,**
a) **dass** die Fördervorrichtung (114) eine Rotationsvorrichtung (226) umfasst, mittels welcher eine Drehausrichtung der Werkstücke (104) um eine vertikale Rotationsachse (228) veränderbar ist; und/oder
b) **dass** die Fördervorrichtung (114) eine Hebevorrichtung (230) umfasst, mittels welcher die Werkstücke (104) von einem ersten Niveau auf ein zweites Niveau anhebbar und/oder von dem zweiten Niveau auf das erste Niveau absenkbar sind; und/oder
c) **dass** die Fördervorrichtung (114) eine Umsetzvorrichtung (222) umfasst, mittels welcher die Werkstücke (104) von einer Teilförderstrecke (224) an eine weitere Teilförderstrecke (224) übergebbar sind, wobei die Förderrichtungen (112) in den zwei Teilförderstrecken (224) voneinander verschieden sind und wobei eine globale Drehausrichtung der Werkstücke (104) relativ zu der Behandlungsanlage (100) in beiden Teilförderstrecken (224) identisch ist; und/oder
d) **dass** die Fördervorrichtung (114) eine Rotationsvorrichtung (226), mittels welcher eine Drehausrichtung der Werkstücke (104) um eine vertikale Rotationsache (228) veränderbar ist, und eine Hebevorrichtung (230) umfasst, mittels welcher die Werkstücke (104) von einem ersten Niveau auf ein zweites Niveau anhebbar und/oder von dem zweiten Niveau auf das erste Niveau absenkbar sind, wobei die Rotationsvorrichtung (226) und die Hebevorrichtung (230) als eine integrierte Handhabungsvorrichtung (236) zur Handhabung der Werkstücke (104) zwischen zwei Teilförderstrecken (224) ausgebildet sind.

14. Verfahren zum Behandeln von als Fahrzeugkarosserien (106) ausgebildeten Werkstücken (104), beispielsweise zum Trocknen von beschichteten Fahrzeugkarosserien (106), wobei das Verfahren Folgendes umfasst:
- Zuführen von Werkstücken (104) zu einem Behandlungsraum (110) einer Behandlungsanlage (100) mittels einer Fördervorrichtung (114) der Behandlungsanlage (100); und/oder
- Hindurchführen von Werkstücken (104) durch den Behandlungsraum (110) in einer Förderrichtung (112) mittels der Fördervorrichtung (114); und/oder
- Abführen von Werkstücken (104) aus dem Behandlungsraum (110) mittels der Fördervorrichtung (114),
**dadurch gekennzeichnet, dass** Gas mittels mehrerer Einlassöffnungen (126) zu dem Behandlungsraum (110) zugeführt und mittels mehrerer Auslassöffnungen (132) aus dem Behandlungsraum (110) abgeführt wird, wobei die Einlassöffnungen (126) einerseits und die Auslassöffnungen (132) andererseits auf einander gegenüberliegenden Seiten des Werkstücks (104) angeordnet sind, wobei eine Durchströmung des Behandlungsraums (110) derart vorgesehen ist, dass mindestens 70 % des durch die Einlassöffnungen (126) einströmenden Gases durch die Auslassöffnungen (132) aus dem Behandlungsraum (110) abgeführt werden, wobei die Werkstücke (104) mittels der Fördervorrichtung (114) zumindest abschnittsweise derart durch den Behandlungsraum (110) gefördert werden, dass eine Längsrichtung (140) der Werkstücke (104) quer zur Förderrichtung (112) ausgerichtet ist, wobei die Einlassöffnungen (126) und die Auslassöffnungen (132) so angeordnet sind, dass der Behandlungsraum (110) im Wesentlichen senkrecht zur Förderrichtung (112) mit Gas durchströmt wird.

15. Verfahren nach Anspruch 14, **dadurch gekennzeichnet, dass**
a) mittels mindestens einer Einlassöffnung (126) Gas zu dem Behandlungsraum (110) zugeführt und mittels mindestens einer Auslassöffnung (132) Gas aus dem Behandlungsraum (110) abgeführt wird, wobei die Zuführung einerseits und die Abführung andererseits auf voneinander verschiedenen Seiten einer vertikalen Werkstückquermittelebene (134) erfolgt; und/oder
b) die Werkstücke (104) diskontinuierlich und/oder getaktet durch den Behandlungsraum (110) gefördert werden, wobei die Werkstücke (104) an einer oder mehreren Haltepositionen angehalten werden und mit einem Gasstrom durchströmt werden; und/oder
c) die Werkstücke (104) zumindest abschnittsweise oder zumindest teilweise in einer Werkstücklängsrichtung (140) mit einem Gasstrom durchströmt werden.
